# EUROPÄISCHE PATENTSCHRIFT

(11) **EP 3 404 207 B1**
(45) Veröffentlichungstag und Bekanntmachung des Hinweises auf die Patenterteilung: **03.06.2020**
(21) Anmeldenummer: 18168722.9
(22) Anmeldetag: 23.04.2018
(51) Int. Cl.: F01D 5/02, F16F 15/34, F01D 5/10, G01M 1/36, F01D 5/06, F01D 25/04

(54) **ROTORANORDNUNG MIT WUCHTELEMENT UND VERFAHREN ZUR MONTAGE EINES WUCHTELEMENTS**
ROTOR ASSEMBLY WITH BALANCING ELEMENT AND METHOD FOR MOUNTING A BALANCING ELEMENT
DISPOSITIF DE ROTOR À ÉLÉMENT D'ÉQUILIBRAGE ET PROCÉDÉ DE MONTAGE D'UN ÉLÉMENT D'ÉQUILIBRAGE

(30) Priorität: 28.04.2017 DE 102017207283
(43) Veröffentlichungstag der Anmeldung: 21.11.2018
(73) Patentinhaber: Rolls-Royce Deutschland Ltd & Co KG, 15827 Blankenfelde-Mahlow (DE)
(72) Erfinder: DREVS, Steffen, 15827 Blankenfelde-Mahlow (DE); ROCKEL, David, 15827 Blankenfelde-Mahlow (DE)
(74) Vertreter: Maikowski & Ninnemann Patentanwälte Partnerschaft mbB

(56) Entgegenhaltungen:
- EP-A2- 1 602 855
- US-A1- 2011 027 085
- US-A1- 2011 044 816
- US-A1- 2011 078 901
- US-A1- 2013 236 310

## Beschreibung

Die Erfindung betrifft eine Rotoranordnung nach dem Oberbegriff des Anspruchs 1 sowie ein Verfahren zur Montage eines Wuchtelements an einem Rotor.

Das Auswuchten eines Rotors für ein Triebwerk, insbesondere eines Rotors für ein Gasturbinentriebwerk, erfolgt üblicherweise über die Anbringung von Wuchtelementen an unterschiedlichen Wuchtpositionen. Die Anbringung von einzelnen Wuchtelementen ist dabei das Mittel der Wahl, wenn beispielsweise eine selektive Anordnung von Rotorschaufeln an einer Rotorscheibe des Motors nicht möglich ist und beispielsweise der Rotor mit den Rotorschaufeln einstückig als Blisk hergestellt ist. Kann bei einem Rotor, bei dem die Rotorschaufeln separat hergestellt und an die Rotorscheibe montiert sind, durch Messungen an den einzelnen Rotorschaufeln computergestützt eine Verteilung der Rotorschaufeln über den Umfang des Rotor erreicht werden, die Unwuchten vermeidet, bleibt bei einer Blisk mit einstückig mit der Rotorscheibe ausgebildeten Rotorschaufeln zum Ausgleich von Unwuchten nur die Möglichkeit, lokal Material abzutragen oder lokal Wuchtelemente anzubringen. Hierbei wird mit Blick auf Kosten und Aufwand üblicherweise das Anbringen von Wuchtelementen favorisiert.

Aus dem Stand der Technik sind in diesem Zusammenhang unterschiedlich ausgestaltete Wuchtelemente und hieran angepasste Befestigungsabschnitte an Rotoren eines Triebwerks bekannt, um die jeweiligen Wuchtelementen an dem Rotor anbringen zu können. Beispielsweise ist es aus der DE 10 2008 016 329 A1 bekannt, an einer sich entlang einer Umfangsrichtung um eine Mittelachse des Rotors erstreckenden Rotorscheibe (bezüglich dieser Mittelachse) radial nach innen gerichtete Stege mit Aufnahmenuten für jeweils ein Wuchtelement vorzusehen. Die Gestaltung der durch die radial nach innen gerichteten Stege und Aufnahmenuten definierten Befestigungsabschnitte für die Wuchtelemente ist hierbei vergleichsweise komplex. Ferner können die Wuchtelemente bei der Rotoranordnung der DE 10 2008 016 329 A1 lediglich von innen montiert werden und sind dann nach der Montage nicht mehr ohne Weiteres entfernbar. So sollen die Wuchtelemente der DE 10 2008 016 329 A1 nach der Anbringung zur Fixierung an dem jeweiligen Befestigungsabschnitt verformt werden und die Befestigungsabschnitte sind von einer radial äußeren Seite nicht zugänglich. Weitere Wuchtelemente sind bekannt aus der US2011/0044816, US2011/0027085 und US2011/0078901.

Der Erfindung liegt daher die Aufgabe zugrunde, eine Rotoranordnung mit einem Rotor und mindestens einem hieran angebrachten Wuchtelement und ein zugehöriges Montageverfahren insbesondere im Hinblick auf die Montierbarkeit und das Auswuchten des Rotors zu verbessern.

Diese Aufgabe wird sowohl mit einer Rotoranordnung des Anspruchs 1 als auch mit einem Montageverfahren des Anspruchs 11 gelöst.

Die vorgeschlagene Rotoranordnung weist hierbei wenigstens einen Rotor für ein Triebwerk auf, der eine sich entlang einer Umfangsrichtung um eine Mittelachse des Rotors erstreckende Rotorscheibe aufweist. Ferner ist mindestens ein Wuchtelement vorgesehen, dass an der Rotorscheibe zum Auswuchten des Rotors angebracht ist. Das mindestens eine Wuchtelement ist hierbei an mindestens einem axial bezüglich der Mittelachse vorstehenden Befestigungsabschnitt der Rotorscheibe angebracht, indem das Wuchtelement den axial vorstehenden Befestigungsabschnitt umgreift.

Durch den mindestens einen axial vorstehenden Befestigungsabschnitt in Kombination mit einem diesen Befestigungsabschnitt umgreifenden Wuchtelement lässt sich das Wuchtelement zum Auswuchten des Rotors nicht nur vergleichsweise einfach und verliersicher an der Rotorscheibe festlegen. Vielmehr kann das Wuchtelement auch von einer radial äußeren Seite aus weiterhin ohne Weiteres zugänglich bleiben, beispielsweise um auch nach der Montage des Rotors in ein Triebwerk oder zumindest nach dem Zusammenbau eine den Rotor aufweisenden Rotorbaugruppe die Position des mindestens einen Wuchtelements an der Rotorscheibe verändern zu können.

Für den Umgriff des Befestigungsabschnitts kann das mindestens eine Wuchtelement einen Wuchtelementkörper mit einem Umgriffsabschnitt aufweisen. Mittels dieses Umgriffsabschnitts umgreift dann das Wuchtelement den axial vorstehenden Befestigungsabschnitt.

In einer alternativen Ausführungsvariante erfolgt der Umgriff mittels wenigstens eines Abschnitts eines Wuchtelementkörpers des Wuchtelements und wenigstens eines Abschnitts eines Fixierungselements, das an dem Wuchtelementkörper verstellbar gelagert ist. Das Fixierungselement kann hierbei beispielsweise radial bezüglich der Mittelachse verstellbar sein, um eine Klemmkraft zur Fixierung des Wuchtelements an dem Befestigungsabschnitt aufzubringen, wenn das Wuchtelement an einer gewünschte / vorgegebenen Wuchtposition vorliegt.

Hierbei kann insbesondere vorgesehen sein, dass sich das das Fixierungselement nicht durch den Befestigungsabschnitt hindurch erstreckt. In einem hierauf basierenden Ausführungsbeispiel wird der Befestigungsabschnitt von dem Wuchtelement umgriffen, indem der Befestigungsabschnitt zwischen einem (bezüglich der Mittelachse) radial außen liegenden Abschnitt des Wuchtelementkörpers und einem radial innen liegenden Abschnitt des Fixierungselements eingeklemmt wird. Bei dem radial innen liegenden Abschnitt des Fixierungselements handelt es sich beispielsweise um einen Klemmkopf. Dieser Klemmkopf ist dann in Richtung des radial außen liegenden Abschnitts des Wuchtelementkörpers verlagerbar, um den Klemmkopf in Anlage mit dem Befestigungsabschnitt zu bringen und um das Wuchtelement klemmend an dem Befestigungsabschnitt zu fixieren.

In einer Ausführungsvariante weist ein Umgriffsabschnitt des Wuchtelementkörpers mindestens einen bezüglich der Mittelachse radial äußeren ersten Schenkelabschnitt und mindestens einen radial inneren zweiten Schenkelabschnitt auf, wobei dann zwischen den ersten und zweiten Schenkelabschnitten wenigstens ein Teil des axial vorstehenden Befestigungsabschnitt aufgenommen ist. Wenigstens ein Teil des axial vorstehenden und von der Rotorscheibe ausgebildeten Befestigungsabschnitts ist somit sandwichartig zwischen den ersten und zweiten Schenkelabschnitten des Umgriffsabschnitts aufgenommen, um das Wuchtelement formschlüssig an der Rotorscheibe zu halten. Ein derartiger Umgriff des mindestens einen Befestigungsabschnitts der Rotorscheibe kann einerseits gewährleisten, dass das Wuchtelement an der Rotorscheibe problemlos verliersicher angebracht werden kann, und andererseits ermöglichen, das bereits angebrachte Wuchtelement entlang der Umfangsrichtung relativ zu der Rotorscheibe verstellbar bleibt, bis eine Fixierung des Wuchtelements an einer vorgegebenen Wuchtposition erfolgt.

Sowohl für eine definierte Anlage des Wuchtelementkörpers an dem mindestens einen Befestigungsabschnitt der Rotorscheibe als auch für eine zusätzliche axiale Sicherung des einmal an den Befestigungsabschnitt angebrachten Wuchtelements kann wenigstens einer der ersten und zweiten Schenkelabschnitte eine in Richtung des Befestigungsabschnitts konvexe Wölbung aufweisen. Über diese konvexe Wölbung kann das bestimmungsgemäß an den mindestens einen Befestigungsabschnitt der Rotorscheibe montierte Wuchtelement in einer möglichen Weiterbildung auch den Befestigungsabschnitt in axialer Richtung hintergreifen, um ein unbeabsichtigtes Lösen des bestimmungsgemäß an die Rotorscheibe montierten Wuchtelements zu vermeiden.

In einer Ausführungsvariante mit einem Umgriffsabschnitt kann das mindestens eine Wuchtelement ebenfalls ein relativ zu dem Wuchtelementkörper verstellbares Fixierungselement umfassen. Das Fixierungselement ist auch hierbei beispielsweise radial bezüglich der Mittelachse verstellbar. Das Fixierungselement dient dabei der Fixierung des Wuchtelements an dem axial vorstehenden Befestigungsabschnitt nach Anbringung des Wuchtelementkörpers hieran.

In diesem Zusammenhang kann das Fixierungselement zur Fixierung des Wuchtelements an dem Befestigungsabschnitt beispielsweise derart eingerichtet und relativ zu dem Wuchtelementkörper verstellbar gelagert sein, dass ein radialer Abstand der ersten und zweiten Schenkelabschnitte durch Verstellen des Fixierungselements veränderbar ist. Bei dieser Variante wird somit über das Fixierungselement erreicht, dass die ersten und zweiten sich gegenüberliegenden Schenkelabschnitte gegeneinander verspannt werden können, um zwischen ihnen den umgriffenen Teil des axial vorstehenden Befestigungsabschnitt formschlüssig und klemmend einzufassen und damit das Wuchtelement in einer vorgegebenen Wuchtposition an der Rotorscheibe festzulegen.

In dieser Variante erstreckt sich das Fixierungselement an der Rotoranordnung mit einem Abschnitt radial bezüglich der Mittelachse zwischen den ersten und zweiten Schenkelabschnitten, um beispielsweise jeweils direkt mit den ersten und zweiten Schenkelabschnitten verbunden zu sein und direkt hierauf einwirken zu können.

In einer Ausführungsvariante verläuft der sich zwischen den ersten und zweiten Schenkelabschnitten erstreckende Abschnitt des Fixierungselements nicht durch den Befestigungsabschnitt hindurch, sondern an diesem vorbei. Der sich zwischen den ersten und zweiten Schenkelabschnitten erstreckende Abschnitt des Fixierungselements erstreckt sich somit insbesondere nicht durch eine Bohrung in dem Befestigungsabschnitt, sondern verläuft axial versetzt zu dem Befestigungsabschnitt.

In einer alternativen Ausführungsvariante ist das Fixierungselement zur Fixierung des Wuchtelements an dem Befestigungsabschnitt derart eingerichtet und relativ zu dem Wuchtelementkörper verstellbar gelagert, dass das Fixierungselement mit dem Befestigungsabschnitt in Kontakt gebracht werden kann. Wird bei der vorstehend erläuterten Variante über das Fixierungselement eine Anlage der ersten und zweiten sich gegenüberliegenden Schenkelabschnitte auf unterschiedlichen Seiten des axial vorstehenden Befestigungsabschnitt erreicht und hierüber das Wuchtelement an dem Befestigungsabschnitt fixiert, dient bei dieser alternativen Ausführungsvariante das Fixierungselement selbst als Gegenlager und wird mit einem Abschnitt in Anlage zu dem Befestigungsabschnitt gebracht. Hierbei kann beispielsweise das sich an einer ersten radial äußeren (Außen-) Seite des Befestigungsabschnitt abstützende Fixierungselement verstellt werden, sodass sich der Wuchtelementkörper radial nach außen verlagert und hierüber der zweite radial innere Schenkelabschnitt des Umgriffsabschnitts in Richtung einer zweiten (Innen-) Seite des Befestigungabschnitts verlagert wird, die der ersten (Außen-) Seite des Befestigungsabschnitts für das Fixierungselement gegenüberliegt. In dieser Variante wird dann folglich ein Bereich des Befestigungsabschnitts nicht zwischen den den Befestigungsabschnitt umgreifenden ersten und zweiten Schenkelabschnitten eingeklemmt, sondern zwischen dem Fixierungselement und nur einem der ersten und zweiten Schenkelabschnitte.

Grundsätzlich kann das Fixierungselement für die Aufbringung einer Klemmkraft zur Fixierung des Wuchtelementkörpers in einer vorgegebenen Wuchtposition eine Kontaktfläche ausbilden, über die das Fixierungselement zur Fixierung des Wuchtelements an dem Befestigungsabschnitt - je nach Ausführungsvariante - auf einen der ersten und zweiten Schenkelabschnitte oder den axial vorstehenden Befestigungsabschnitt einwirkt. Diese Kontaktfläche ist beispielsweise an einem (Klemm-) Kopf des Fixierungselements ausgebildet. Dieser Klemmkopf hintergreift dann einen, zum Beispiel den zweiten radial inneren Schenkelabschnitt, oder den Befestigungsabschnitt und/oder wird durch Verstellung des Fixierungselements relativ zu dem Wuchtelementkörper gegen den axial vorstehenden Befestigungsabschnitt gedrückt.

Um das Fixierungselement an dem Wuchtelementkörper verstellbar festzulegen, weisen das Wuchtelement und das Fixierungselement in einer Ausführungsvariante jeweils ein Gewinde auf. Beispielsweise umfasst das Fixierungselement ein Außengewinde und der Wuchtelementkörper umfasst ein Innengewinde. Das Fixierungselement kann dementsprechend mit seinem Außengewinde in eine mit dem Innengewinde versehene Öffnung oder Bohrung des Wuchtelementkörpers eingedreht werden. Wird dann das Fixierungselement bei bereits an dem axial vorstehenden Befestigungsabschnitt angebrachten Wuchtelementkörper weiter eingedreht (und hierbei beispielsweise in radialer Richtung bezüglich der Mittelachse verstellt) wird hierüber (a) ein Abstand der ersten und zweiten Schenkelabschnitte des Umgriffsabschnitts oder (b) ein Abstand zwischen dem Fixierungselement und einem gegenüberliegenden (zweiten) Schenkelabschnitt verringert, um das Wuchtelement final zu fixieren.

Das Fixierungselement bildet in einer Ausführungsvariante eine bezüglich der Mittelachse radial außen liegende Werkzeugschnittstelle aus, an der ein Montagewerkzeug angreifen kann, um das Fixierungselement relativ zu dem Wuchtelementkörper zu verstellen. Die Werkzeugschnittstelle kann hierbei beispielsweise einen Außen- oder Innensechskant umfassen. Über die Anordnung der Werkzeugschnittstelle an einer radial außen liegenden Seite des Wuchtelements kann die Fixierung des Wuchtelements in einer gewünschten Wuchtposition vergleichsweise einfach vorgenommen werden. Ebenso kann eine Fixierung des Wuchtelements vergleichsweise einfach wieder gelöst werden. Bei gelöster Fixierung kann dann auch der Wuchtelementkörper über den Umgriff an dem axial vorstehenden Befestigungsabschnitt in Umfangsrichtung um die Mittelachse in eine andere Wuchtposition verschoben werden. Das Wuchtelement und ein Montagewerkzeug für die Fixierung des Wuchtelements können hierbei derart ausgebildet sein, dass mittels des Montagewerkzeugs bei gelöster Fixierung auch ein Verschieben des Wuchtelementkörpers in Umfangsrichtung möglich ist, bevor das Wuchtelement dann wieder in einer neuen Wuchtposition durch Verstellen des Fixierungselements mithilfe des Montagewerkzeugs fixiert wird.

In einem Ausführungsbeispiel weist der Umgriffsabschnitt des Wuchtelementkörpers in einer Seitenansicht entlang der Mittelachse gesehen eine trapezförmige Kontur auf. Die längere Seite dieser trapezförmigen Kontur liegt hierbei an der Rotoranordnung radial innen. Hierüber ist insbesondere bei einer Fixierung des Wuchtelements über ein radial außen auf den Befestigungsabschnitt einwirkendes Fixierungselement und mindestens einen radial innere Schenkelabschnitt, der durch Verstellung des Fixierungselements in radialer Richtung nach außen gegen den Befestigungsabschnitt verlagert wird, ein verbesserter Spannungsverlauf innerhalb des Umgriffsabschnitts erreicht. Insbesondere lassen sich hierüber nachteilige Biegemomente bei der Fixierung des Wuchtelements reduzieren.

In einem Ausführungsbeispiel weist der Umgriffsabschnitt zwei zweite radial innere Schenkelabschnitte auf, die einem (einzigen) ersten radial äußeren Schenkelabschnitt gegenüberliegen. Der Umgriffsabschnitt weist somit zwei separierte radial innere Schenkelabschnitte auf, um an zwei räumlich zueinander versetzten Stellen (in unterschiedlichen Befestigungsbereichen des Befestigungsabschnitts) über diese zweiten Schenkelabschnitte an dem axial vorstehenden Befestigungsabschnitt anzuliegen, wenn das Wuchtelement bestimmungsgemäß fixiert ist.

Beispielsweise ist zwischen den zwei zweiten radial inneren Schenkelabschnitten eine sich in Umfangsrichtung erstreckende Aussparung an dem Umgriffsabschnitt ausgebildet. Über diese Aussparung sind die beiden zweiten Schenkelabschnitte voneinander räumlich getrennt, um eine definierte Krafteinleitung an den Schenkelabschnitten bei der Fixierung des Wuchtelements zu erreichen. Durch die mit der Aussparung einhergehende Materialeinsparung lässt sich zudem vermeiden, dass durch die zwei Schenkelabschnitte ein Gewicht des Wuchtelements gegenüber einer Variante mit nur einem zweiten radial inneren Schenkelabschnitt signifikant erhöht ist.

Der Befestigungsabschnitt an der Rotorscheibe, an dem ein Wuchtelement oder mehrere Wuchtelemente festgelegt werden können, ist in einer Ausführungsvariante ringförmig oder ringsegmentförmig ausgebildet. Der ringförmige oder ringsegmentförmige Befestigungsabschnitt erstreckt sich dabei dann entlang einer Kreislinie um die Mittelachse an der Rotorscheibe. Bei der Montage des Wuchtelements kann dann der Wuchtelementkörper an den ringförmigen oder ringsegmentförmigen Befestigungsabschnitt angesetzt werden, sodass ein Teil des Befestigungsabschnitts von dem Wuchtelement, z.B. mittels des Umgriffsabschnitts des Wuchtelementkörpers oder mittels des Wuchtelementkörpers und einem Fixierungselement, umgriffen ist. An dem ringförmigen oder ringsegmentförmigen Befestigungsabschnitt kann dann der derart an den Befestigungsabschnitt gehaltene Wuchtelementkörper entlang der Umfangsrichtung verschoben werden, bis der Wuchtelementkörper an einer vorgegebenen (anderen) Wuchtposition vorliegt, in der eine Unwucht des Rotors ausgeglichen wird. Anschließend wird dann das Wuchtelement, zum Beispiel über das Eindrehen eines Fixierungselements, an der eingenommenen Wuchtposition fixiert.

Alternativ oder ergänzend weist der Befestigungsabschnitt mindestens zwei in Umfangsrichtung zueinander beabstandete axial vorstehende Befestigungsbereiche auf. Die jeweils axial vorstehenden Befestigungsbereiche, die zum Beispiel in Umfangsrichtung durch eine Lücke voneinander getrennt sind, können unterschiedliche Wuchtpositionen für je ein Wuchtelement definieren und/oder eine definierte Kontaktstelle für ein Fixierungselement oder einen der ersten und zweiten Schenkelabschnitte des Umgriffsabschnitts.

Beispielsweise ist in einer Weiterbildung vorgesehen, dass der Befestigungsabschnitt zwei äußere, jeweils axial vorstehende (erste) Befestigungsbereiche aufweist sowie einen zwischen den zwei äußeren Befestigungsbereichen einen ebenfalls axial vorstehenden inneren oder mittleren (zweiten) Befestigungsbereich. Wird in einer solchen Ausführungsvariante ein Wuchtelement mit einem radial äußeren Schenkelabschnitt und zwei radial inneren Schenkelabschnitten verwendet, kann über die unterschiedlichen Befestigungsbereiche eines Befestigungsabschnitts eine Wuchtposition für ein eventuell anzubringendes Wuchtelement vergleichsweise genau vorgegeben werden. So ist dann jeweils ein äußerer axial vorstehender Befestigungsbereich zwischen dem radial äußeren ersten Schenkelabschnitt und einem der zwei radial inneren zweiten Schenkelabschnitte aufgenommen, während der innere Befestigungsbereich lediglich der Abstützung des ersten Schenkelabschnitts oder des Fixierungselements dient. Im letzteren Fall wirkt folglich auf den (zweiten) inneren Befestigungsbereich, der zwischen den zwei äußeren Befestigungsbereichen des Befestigungsabschnitt liegt, das Fixierungselement selbst ein, um das Wuchtelement an dem Befestigungsabschnitt zu fixieren.

Zwischen den axial vorstehenden äußeren Befestigungsbereichen und dem axial vorstehenden inneren Befestigungsbereich kann jeweils eine Lücke ausgebildet sein, um Material und damit Gewicht an der Rotorscheibe zu sparen.

Grundsätzlich können mehrere vorzugsweise geometrisch identisch ausgebildete Befestigungsabschnitt und/oder mehrere Wuchtelemente an der Rotorscheibe vorgesehen werden. Bei der Vorgabe definierter Wuchtpositionen entlang des Umfangs, an denen ein Wuchtelement bestimmungsgemäß festgelegt werden kann, sind diese möglichen Wuchtpositionen gegebenenfalls zahlenmäßig beschränkt. Beispielsweise sind mindestens 8, jedoch höchstens 24, z.B. 16 bis 18 Wuchtpositionen an der Rotorscheibe des Rotors vorgegeben, an denen ein Wuchtelement bestimmungsgemäß festgelegt werden kann.

In einer Ausführungsvariante sind insbesondere vor diesem Hintergrund mehrere entlang der Umfangsrichtung aufeinanderfolgende und jeweils axial vorstehende Befestigungsabschnitte an der Rotorscheibe vorgesehen, zwischen denen jeweils ein Zwischenbereich mit gegenüber den Befestigungsabschnitten reduzierter axialer Erstreckung vorgesehen sind. In den Zwischenbereichen ist dabei folglich die Anbringung eines Wuchtelement durch axialen Umgriff nicht möglich. Die möglichen Anbringungsstellen für ein Wuchtelement an der Rotorscheibe sind dementsprechend begrenzt. Dafür ist über die Zwischenbereiche mit reduzierter axialer Erstreckung Gewicht insbesondere gegenüber einer Variante eingespart, bei der ein Befestigungsabschnitt sich durchgehende ringförmig an der Rotorscheibe erstreckt. Vorzugsweise ist ein Befestigungsabschnitt jeweils einstückig an der Rotorscheibe ausgebildet und damit an dieser ausgeformt.

Ein Rotor der Rotoranordnung ist beispielsweise für ein Gasturbinentriebwerk vorgesehen. Beispielsweise handelt es sich um einen mit Rotorschaufeln versehenen Rotor für eine Verdichterstufe des Gasturbinentriebwerks, zum Beispiel einen Rotor eines Hochdruckverdichters des Gasturbinentriebwerks.

Ein weiterer Aspekt der vorgeschlagenen Lösung ist ein verbessertes Verfahren zur Montage eines Wuchtelements an einem um eine Mittelachse drehbaren Rotor.

Der Rotor umfasst auch hier eine Rotorscheibe mit mindestens einem bezüglich der Mittelachse axial vorstehenden Befestigungsabschnitt, an dem ein Wuchtelement zum Auswuchten des Rotors angebracht werden kann. Das vorgeschlagene Verfahren umfasst dann hierbei wenigstens die folgenden Schritte:
- Bereitstellen eines Wuchtelements mit Montagemaul, und
- Anbringen des Wuchtelements mit dem Wuchtelementkörper an dem mindestens einen Befestigungsabschnitt, sodass der Befestigungsabschnitt von dem Wuchtelement umgriffen ist und wenigstens ein Teil des Befestigungsabschnitts in dem Montagemaul aufgenommen ist.

Das Montagemaul kann hierbei durch mindestens zwei sich gegenüberliegende Schenkelabschnitte eines Umgriffsabschnitts des Wuchtelementkörpers des Wuchtelements definiert sein, wie dies bereits vorstehend erläutert wurde. Alternativ ist das für den Umgriff des Befestigungsabschnitts vorgesehene Montagemaul durch einen Abschnitt des Wuchtelementkörpers und einen Abschnitt eines hieran verstellbaren Fixierungselements definiert, also zum Beispiel durch einen Schenkelabschnitt des Wuchtelementkörper und einen Klemmkopf des Fixierungselements, das diesem Schenkelabschnitt gegenüberliegt.

Das an den Befestigungsabschnitt angebrachte Wuchtelement kann hierbei entlang einer Umfangsrichtung um die Mittelachse in eine Wuchtposition (von gegebenenfalls mehreren möglichen und vordefinierten Wuchtpositionen) verschoben und anschließend fixiert werden. Das Wuchtelement wird somit über den Wuchtelementkörper, wie bereits vorstehend erläutert, zunächst an dem Befestigungsabschnitt angebracht, und zwar derart, dass das Wuchtelement noch an der Rotorscheibe verlagerbar, insbesondere verschieblich gehalten ist. Das Wuchtelement kann somit entlang der Umfangsrichtung um die Mittelachse des Rotors entlang einer durch die Befestigungsabschnitt vorgegebenen Verstellbahn verlagert werden, wobei über den formschlüssigen Umgriff des Befestigungsabschnitts sichergestellt ist, dass der Wuchtelementkörper an dem Befestigungsabschnitt verbleibt. Nehmen der Wuchtelementkörper und damit das Wuchtelement die gewünschte Wuchtposition entlang des Umfangs ein, erfolgt die Fixierung des Wuchtelements.

Für die Fixierung des Wuchtelements wird dann beispielsweise das an dem Wuchtelementkörper verstellbar gelagerte Fixierungselement verstellt.

Im Zuge einer Ausführungsvariante eines möglichen Montageverfahrens wird zum Anbringen des Wuchtelementkörpers an den Befestigungsabschnitt ein Montagewerkzeug genutzt, an dem der Wuchtelementkörper formschlüssig gehalten ist und mittels dem der Wuchtelementkörper ferner in die Wuchtposition an der Rotorscheibe verschoben wird. Das Montagewerkzeug ist somit für eine formschlüssige Verbindung mit dem Wuchtelementkörper vorgesehen, um den Wuchtelementkörper mithilfe des Montagewerkzeugs einfach und schnell so an dem Rotor anbringen zu können, dass der Befestigungsabschnitt von dem Umgriffsabschnitt des Wuchtelementkörpers oder dem Wuchtelementkörper und dem Fixierungselement umgriffen ist. Über das Montagewerkzeug selbst ist dann weiterhin eine Verlagerung des Wuchtelementkörpers entlang der Umfangsrichtung ermöglicht, um den Wuchtelementkörper in die gewünschte Wuchtposition zu verlagern, insbesondere zu verschieben. Der Formschluss des Wuchtelementkörpers und dem Montagewerkzeug ist beispielsweise durch einen hakenförmigen Abschnitt des Montagewerkzeugs bereitgestellt. In einer Ausführungsvariante weist das Montagewerkzeug einen als Haltehaken ausgebildeten Abschnitt auf, der an einer korrespondierenden Schnittstelle des Wuchtelementkörpers eingesteckt werden kann. In einer Weiterbildung weist beispielsweise der Wuchtelementkörper einen gegenüber angrenzenden Abschnitten des Wuchtelementkörpers zurückgesetzten Mittelteil auf, an dem eine Dicke des Wuchtelementkörpers reduziert ist und an den der Haltehaken des Montagewerkzeugs angesteckt wird, um den Wuchtelementkörper zu umgreifen und über das Montagewerkzeug an den Rotor ansetzen zu können.

Das Montagewerkzeug ist beispielsweise wenigstens zweiteilig mit einem den Wuchtelementkörper formschlüssig haltenden Halteteil und einem an dem Halteteil verstellbar gelagerten Teil für die Verstellung eines Fixierungselements ausgebildet. Über das Montagewerkzeug kann somit der Wuchtelementkörper an der Rotorscheibe angebracht werden, sodass z.B. der mindestens eine Befestigungsabschnitt von dem Umgriffsabschnitt des Wuchtelementkörpers umgriffen ist. Anschließend wird mit demselben Montagewerkzeug - und ohne den Wuchtelementkörper von dem Halteteil des Montagewerkzeugs, zum Beispiel in Form des Haltehakens trennen zu müssen - dass Fixierungselemente des Wuchtelements relativ zu dem Wuchtelementkörper verstellt und hierüber das Wuchtelement endgültig in der gewünschten Wuchtposition fixiert.

Das verstellbar gelagerte Teil ist in einer Ausführungsvariante an dem Halteteil des Montagewerkzeugs drehbar und verschieblich gelagert. Für die Fixierung des Wuchtelements kann dann das derart verstellbar gelagerte Teil mit dem Fixierungselement drehfest verbunden werden, während der Wuchtelementkörper an dem Halteteil gehalten bleibt. In einer hierauf basierenden Weiterbildung ist beispielsweise das Fixierungselement am Wuchtelementkörper drehbar gelagert und mit einem Außengewinde versehen. Über das Außengewinde kann das Fixierungselement an einem mit Innengewinde versehenen Gewindeabschnitt des Wuchtelementkörpers zur Fixierung des Wuchtelements eingedreht werden kann. Hierdurch kann, wie vorstehend bereits erläutert, in einer Ausführungsvariante das Fixierungselement in Anlage mit einer ersten (Außen-) Seite des Befestigungsabschnitts gebracht werden und ein zweiter radial innerer Schenkelabschnitt des Umgriffsabschnitts gegen die gegenüberliegende zweite (Innen-) Seite des Befestigungsabschnitts gespannt werden. In einer alternativen Ausführungsvariante, bei der das Fixierungselement an dem zweiten radial inneren Schenkelabschnitt formschlüssig fixiert ist und der Gewindeabschnitt des Wuchtelementkörpers einstückig mit dem ersten radial äußeren Schenkelabschnitt verbunden ist, werden durch das (weitere) Eindrehen des Fixierungselements die ersten und zweiten Schenkelabschnitte aneinander angenähert. Ebenso kann in einer Ausführungsvariante das Fixierungselement in Anlage mit einer zweiten (Innen-) Seite des Befestigungsabschnitts gebracht werden und ein erster radial äußerer Schenkelabschnitt des Wuchtelementkörpers gegen die gegenüberliegende erste (Außen-) Seite des Befestigungsabschnitts gespannt werden. Über das zweiteilig ausgeführte Montagewerkzeug wird somit in allen Fällen der Wuchtelementkörper in Position gebracht und anschließend das Fixierungselement eingedreht, um das Wuchtelement mit Wuchtelementkörper und Fixierungselement in einer gewünschten Wuchtposition klemmend zu fixieren. Durch die Ausbildung eines drehbaren Fixierungselements, dass in ein Innengewinde des Wuchtelementkörpers eingreift, kann dabei eine Fixierung des Wuchtelements auch mithilfe eines entsprechend verstellbaren und insbesondere drehbar gelagerten Teil des Montagewerkzeugs ohne weiteres wieder gelöst und das Wuchtelement verlagert werden.

In einer Variante ist das verstellbare Fixierungselement an dem Wuchtelementkörper mittels eines Sicherungselements gegen ein Entfernen von dem Wuchtelement gesichert. Beispielsweise ist das verstellbare Fixierungselement gegen ein Entfernen von dem Wuchtelement bezüglich der Mittelachse in radialer Richtung gesichert. Das Fixierungselement kann beispielsweise somit nicht einfach aus dem Wuchtelementkörper herausgedreht werden. Über das Sicherungselement, das beispielsweise als Sicherungsring ausgebildet ist, kann ferner auch bei dem mehrteilig ausgeführten Wuchtelement sichergestellt werden, dass das verstellbare Fixierungselement an dem Wuchtelementkörper in einer Montageposition vorliegt, bevor das Wuchtelement an dem axial vorstehenden Befestigungsabschnitt der Rotorscheibe angebracht wird.

Das Fixierungselement kann grundsätzlich beispielsweise schraubenartig mit einem Gewindeabschnitt, einem Schaft und einem (Klemm-) Kopf ausgebildet sein, wobei über den (Klemm-) Kopf auf den Befestigungsabschnitt oder einen der Schenkelabschnitte eingewirkt wird, um das Wuchtelement zu fixieren.

Das vorgeschlagene Montageverfahren kann letztendlich auch bei der vorgeschlagenen Rotoranordnung zum Einsatz kommen, sodass vorstehend und nachstehend im Zusammenhang mit Ausführungsbeispielen für eine solche Rotoranordnung dargestellte Vorteile und Merkmale auch für Ausführungsvarianten eines Montageverfahrens gelten und umgekehrt.

Die beigefügten Figuren veranschaulichen exemplarisch mögliche Ausführungsvarianten der vorgeschlagenen Lösung.

Hierbei zeigen:
- Figur 1: ausschnittsweise und in geschnittener Ansicht eine Ausführungsvariante einer Rotoranordnung mit einem ringförmig axial vorstehenden Befestigungsabschnitt an der Rotorscheibe eines Rotors;
- Figur 2: in geschnittener Ansicht und in einem montierten Zustand die Rotoranordnung der Figur 1 mit einem Wuchtelement in einem Hochdruckverdichter eines Gasturbinentriebwerks;
- Figuren 3A-3B: unterschiedliche Ansichten der Rotoranordnungen der Figur 2;
- Figuren 4A-4B: das Wuchtelement der Figuren 2 und 3A bis 3B in geschnittener Ansicht mit einem verstellbar gelagerten Fixierungselement in unterschiedlichen Positionen;
- Figuren 5A-5C: das Wuchtelement der Figuren 4A und 4B in einem montierten Zustand an einem axial vorstehenden Befestigungsabschnitt des Rotors der Figur 1 in unterschiedlichen Phasen während der Fixierung des Wuchtelements;
- Figuren 6A-6B: eine weitere Ausführungsvariante eines Wuchtelements in unterschiedlichen Einzelansichten;
- Figuren 7A-7B: eine Rotoranordnung mit dem Wuchtelement der Figuren 6A und 6B;
- Figuren 8A-8B: die Rotoranordnung der Figuren 7A und 7B mit einem Wuchtelement in vergrößertem Maßstab und in unterschiedlichen Ansichten;
- Figuren 9A-9F: unterschiedliche Ansichten der Rotoranordnung mit einem Montagewerkzeug zur Anbringung und Fixierung des Wuchtelements der Figuren 7A bis 8B;
- Figur 10: in vergrößertem Maßstab das zweiteilig ausgeführte Montagewerkzeug mit Blick auf einen Haltehaken und ein verstellbar gelagertes Drehteile des Montagewerkzeugs;
- Figuren 11A-11B: unterschiedliche perspektivische Ansichten einer weiteren Ausführungsvariante einer Rotoranordnung mit einem alternativ ausgestalteten Wuchtelement für die Anbringung an einem Rotor, zum Beispiel gemäß der Figur 1;
- Figur 12: ausschnittsweise und in geschnittener Ansicht die Rotoranordnung der Figuren 11A und 11B im montierten Zustand in einem Hochdruckverdichter eines Gasturbinentriebwerks;
- Figuren 13A-13B: eine Weiterbildung der Ausführungsvariante der Figuren 11A bis 12 unter Darstellung eines Teils des Befestigungsabschnitts ohne (Figur 13A) und mit Wuchtelement (Figur 13B) in geschnittener Ansicht;
- Figuren 14A-14E: eine weitere Ausführungsvariante einer Rotoranordnung mit einem Wuchtelement, bei dem der Befestigungsabschnitt von dem Wuchtelement mittels eines radial äußeren Schenkelabschnitts eines Wuchtelementkörpers und einem Abschnitt eines an dem Wuchtelementkörper verstellbar gelagerten Fixierungselements umgriffen ist;
- Figur 15: in Schnittansicht ein Gasturbinentriebwerk, in dem eine Ausführungsvariante der vorgeschlagenen Rotoranordnung Verwendung findet.

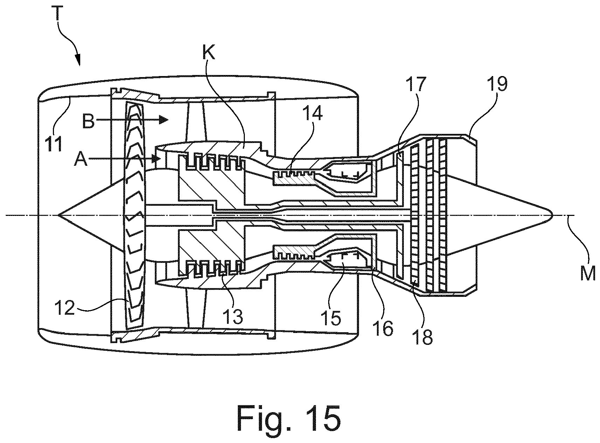

Die Figur 15 zeigt in geschnittener Seitenansicht ein Gasturbinentriebwerk T, das vorliegend als Mantelstromtriebwerk ausgebildet ist. Entlang einer Mittelachse- oder Rotationsachse M sind die einzelnen Komponenten des Gasturbinentriebwerks T aufeinanderfolgend angeordnet. Über einen Fan 12 des Gasturbinentriebwerks T wird an einem Einlass oder Intake 11 Luft in das Gasturbinentriebwerk T eingesaugt. Die einströmende Luft gelangt hinter dem Fan 12 in zwei unterschiedliche Kanäle, einen Primärstromkanal A eines Kerntriebwerks K und einen Sekundärstrom- oder Bypasskanal B, der das Kerntriebwerk K umgibt. Im Kerntriebwerk K sind entlang der Rotationsachse M ein Mitteldruckverdichter 13 und ein Hochdruckverdichter 14 aufeinanderfolgend angeordnet, um die einströmende Luft im Primärstromkanal A zu verdichten. Die Luft gelangt hiernach in eine Brennkammer 15 des Kerntriebwerks K. Über die in dieser Brennkammer 15 mithilfe eines eingespritzten Kraftstoffes stattfindende Verbrennung wird eine Turbine mit Hochdruckturbine 16, Mitteldruckturbine 17 und Niederdruckturbine 18 angetrieben. Hinter der Niederdruckturbine 18 gelangen die durch die Verbrennung entstehenden Abgase über einen Auslass 19 in die Umgebung.

Die Turbine mit Hochdruckturbine 16, Mitteldruckturbine 17 und Niederdruckturbine 18 treibt dabei insbesondere den Fan 12 an, um über die in den Bypasskanal B gelangende Luft den gewünschten Schub zu erzeugen.

Sowohl in den Mitteldruck- und Hochdruckverdichtern 13 und 14 wie auch den Hochdruck- , Mitteldruck- und Niederdruckturbinen 16, 17 und 18 sind um die Rotationsachse M drehbar gelagerte Rotoren mit Rotorschaufeln vorgesehen. Um bei diesen hochdrehenden Rotoren, insbesondere im Bereich des Hochdruckverdichters 14 eine gleichmäßige Drehung sicherzustellen, werden die einzelnen Rotoren einer Rotorschaufelreihe gewuchtet. Die Anbringung entsprechender Wuchtelemente an vorgegebenen Wuchtpositionen an diesen Rotoren ist jedoch aufgrund der Bauraumsituation und der bisher üblichen Designs der Rotoren nur schwierig möglich. Hier soll die vorgeschlagene Lösung Abhilfe schaffen.

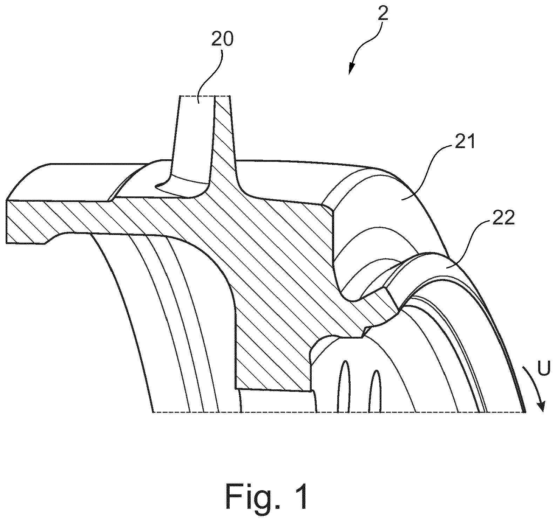

In der Figur 1 ist ein erstes Ausführungsbeispiel einer Rotoranordnung mit einem Rotor 2 ausschnittsweise veranschaulicht. Dieser Rotor 2 ist beispielsweise zur Verwendung in dem Hochdruckverdichter 14 vorgesehen und als Blisk hergestellt. Eine den Rotor 2 drehbar um die Rotationsachse M drehbar lagernde Rotorscheibe 21 ist hier integral, d.h., einstückig, mit den Rotorschaufeln 20 ausgebildet. Die Rotorscheibe 21 erstreckt sich entlang einer Umfangsrichtung U um die zentrale Mittelachse M, die im eingebauten Zustand des Rotors 2 mit der Rotationsachse M des Gasturbinentriebwerks T zusammenfällt.

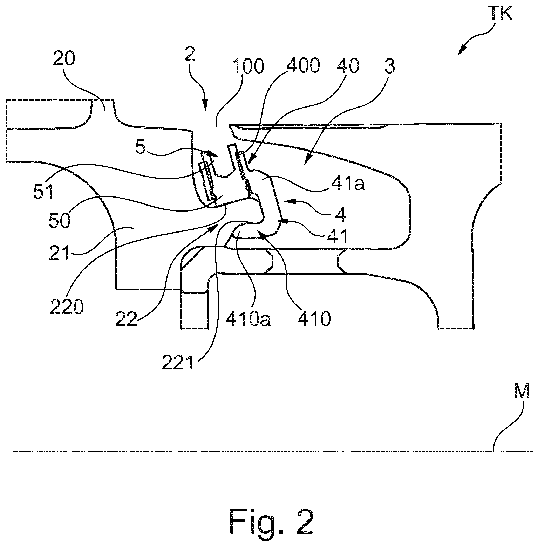

An einer, bezogen auf den eingebauten Zustand des Rotors 2, stromab liegenden Rückseite der Rotorscheibe 21 bildet die Rotorscheibe 21 einen ringförmigen Befestigungsabschnitt 22 aus. Dieser ringförmige Befestigungsabschnitt 22 ist bezogen auf die Mittelachse M axial vorstehend ausgebildet und erstreckt sich entlang einer Kreisbahn um die Mittelachse M entlang der Umfangsrichtung U. Der Befestigungsabschnitt 22 des Rotors 2 der Figur 1 ist ferner leicht radial nach außen geneigt ausgeführt, um die Zugänglichkeit eines Fixierungselements 5 eines an diesem Befestigungsabschnitt 22 angebrachten Wuchtelements 3 zu erleichtern, wenn der Rotor 2 bestimmungsgemäß montiert wurde. Dies ist insbesondere in der Schnittansicht der Figur 2 näher veranschaulicht.

Zum Auswuchten des Rotors 2 ist an mindestens einer Wuchtposition entlang des Umfangs des Befestigungsabschnitts 22 ein Wuchtelement 3 festgelegt. Das Wuchtelement 3 weist hierbei entsprechend der Darstellung der Figur 2 einen Wuchtelementkörper 4 mit einem Umgriffsabschnitt 41 auf, durch den ein Teil des Befestigungsabschnitts 22 umgriffen ist. Der Wuchtelementkörper 4 des Wuchtelements 3 ist somit formschlüssig an dem axial vorstehenden Befestigungsabschnitt 22 gehalten und kann hieran entlang der Umfangsrichtung U noch in die gewünschte Wuchtposition an dem Befestigungsabschnitt 22 entlang verschoben werden.

Der Umgriffsabschnitt 41 des Wuchtelementkörpers 4 bildet einerseits einen ersten radial äußeren Schenkelabschnitt 41a sowie einen in radialer Richtung gegenüberliegenden zweiten, radial inneren Schenkelabschnitt 410 aus. Ist das Wuchtelement 3 bestimmungsgemäß an dem Befestigungsabschnitt 22 angebracht worden, ist ein Teil des Befestigungsabschnitts 22 der Rotorscheibe 21 zwischen den ersten und zweiten Schenkelabschnitten 41a und 410 aufgenommen. Der radial innere Schenkelabschnitt 410 ist somit einer radial innen liegenden Innenseite 221 des Befestigungsabschnitts 22 zugewandt, während der andere radial äußere Schenkelabschnitt 41a einer radial äußeren Außenseite 220 des Befestigungsabschnitts 22 zugewandt ist.

Das Wuchtelement 3 ist vorliegend wenigstens zweiteilig ausgeführt und weist zusätzlich zu dem Wuchtelementkörper 4 mit dem Umgriffsabschnitt 41 ein Fixierungselement in Form einer Schraube 5 auf. Diese Schraube 5 ist an einem hülsenförmigen Gewindeabschnitt 40 des Wuchtelementkörpers 4 im Bereich des ersten radial äußeren Schenkelabschnitts 41a eingedreht. Hierfür bildet der Gewindeabschnitt 40 eine Durchgangsöffnung mit einem Innengewinde 400 aus, in die die Schraube 5 mit einem Außengewinde eingreift. Ein Klemmkopf 50 der Schraube 5 ragt an einem radial inneren Ende der mit dem Innengewinde 400 versehenen Durchgangsöffnung hervor und kann in Anlage mit der Außenseite 220 des Befestigungsabschnitts 22 gebracht werden.

Um die Schraube 5 hierbei in Richtung des Befestigungsabschnitt 22 oder hiervon weg zu verstellen, ist die Schraube 5 an dem Gewindeabschnitt 40 des Wuchtelementkörpers 4 drehbar gelagert. Wird die Schraube 5 hierbei (stärker) in den Wuchtelementkörper 4 eingedreht, wird der Klemmkopf 50 der Schraube 5 gegen die Außenseite 220 des Befestigungsabschnitt 22 gedrückt, wenn der Wuchtelementkörper 4 auf für den Befestigungsabschnitt 22 gesteckt ist. Die Drehung der über den Klemmkopf 50 an dem Befestigungsabschnitt 22 anliegenden Schraube 5 führt dann letztlich dazu, dass der Wuchtelementkörper 4 radial nach außen verlagert wird und damit der radial innere Schenkelabschnitt 410 gegen die Innenseite 221 des Befestigungsabschnitts 22 verlagert wird. Durch Drehen der Schraube 5 kann somit ein Abstand zwischen dem Klemmkopf 50 der Schraube 5 und dem radial inneren Schenkelabschnitt 410 verringert werden und damit das Wuchtelement 3 an dem axial vorstehenden Befestigungsabschnitt 22 fixiert werden.

Zum Anziehen und Lösen der Schraube 5 weist diese eine radial außen liegende Werkzeugschnittstelle 51, zum Beispiel mit einem Innensechskant, auf. An dieser Werkzeugschnittstelle 51 ist die Schraube 5 mit einem Montagewerkzeug verbindbar, um die Schraube 5 relativ zu dem an dem Befestigungsabschnitt 22 festlegbaren Wuchtelementkörper 4 verstellen zu können. Im montierten Zustand des Wuchtelements 3 ist die Werkzeugschnittstelle 51 der Schraube 5 über einen radial außen liegenden Montagespalt 100 von außen zugänglich, der zwischen dem Rotor 2 und eine sich hieran axial anschließenden Triebwerkskomponente TK des Gasturbinentriebwerks T gebildet ist. Bei der weiteren Triebwerkskomponenten TK handelt es sich beispielsweise um einen weiteren drehbaren Rotor des Hochdruckverdichters 14.

Vorliegend sind das mehrteilig ausgeführte Wuchtelement 3 und der axial vorstehende Befestigungsabschnitt 22 des Rotors 2 derart auf die Bauraumverhältnisse abgestimmt, dass die Werkzeugschnittstelle 51 der Schraube 5 über den Montagespalt 100 von außen zugänglich bleibt, wenn der Rotor 2 bereits bestimmungsgemäß mit weiteren Triebwerkskomponenten TK verbunden ist. Es kann somit auch im zusammengebauten Zustand einer Rotorbaugruppe, die den Rotor 2 mit dem mindestens einen Wuchtelement 3 umfasst, ein Montagewerkzeug an die Schraube 5 angesetzt werden, um die Schraube 5 anzuziehen und damit das Wuchtelement 3 an dem Befestigungsabschnitt 22 zu fixieren. Ebenso kann die Schraube 5 auch noch in der Rotorbaugruppe zum Lösen der Fixierung gedreht werden und dann der Wuchtelementkörper 4 entlang des Befestigungsabschnitts 22 in Umfangsrichtung U in eine andere Wuchtposition verschoben werden.

An dem radial inneren Schenkelabschnitt 410 des Umgriffsabschnitts 41 ist eine in Richtung der Innenseite 221 konvexe Wölbung 410a ausgebildet. Über diese konvexe Wölbung 410a ist der axial vorstehende Befestigungsabschnitt 22 hintergriffen und eine körperliche Führung des Wuchtelementkörpers 4 entlang des Befestigungsabschnitts 22 bereitgestellt, wenn die Schraube 5 noch nicht vollständig angezogen ist und noch nicht über ihren Klemmkopf 50 klemmend an der Außenseite 220 des Befestigungsabschnitt 22 anliegt.

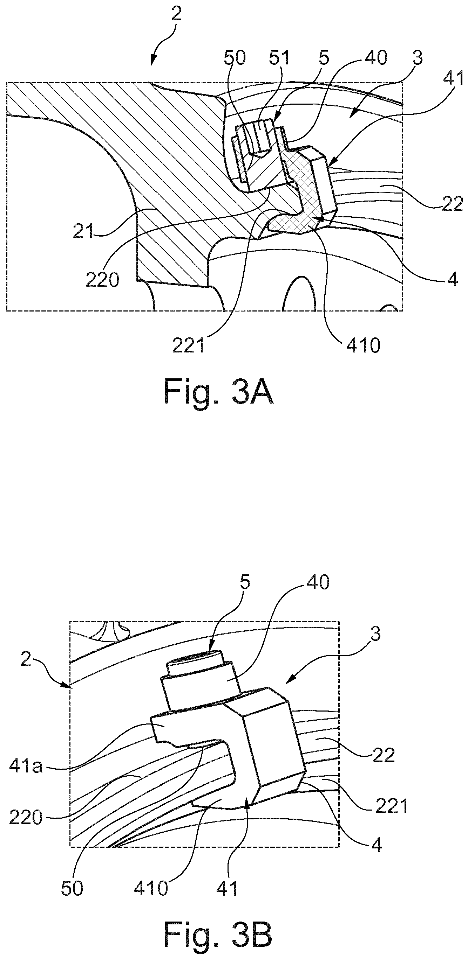

Die Figuren 3A und 3B veranschaulichen in unterschiedlichen perspektivischen Ansichten nochmals den formschlüssigen Umgriff des Wuchtelements 3 an dem axial vorstehenden, ringförmigen Befestigungsabschnitt 22 der Rotorscheibe 21. Der Umgriffsabschnitt 41 des Wuchtelementkörpers 4 ist in Seitenansicht C-förmig und weist einen sich radial nach außen erstreckenden hülsenförmigen Gewindeabschnitt 40 an dem äußeren Schenkelabschnitt 41a auf. Die in den Gewindeabschnitt 40 eingedrehte Schraube 5 kann in Richtung des radial inneren Schenkelabschnitts 410 weiter in den Gewindeabschnitt 40 eingedreht werden und damit das Wuchtelement 3 an dem Befestigungsabschnitt 22 fixieren.

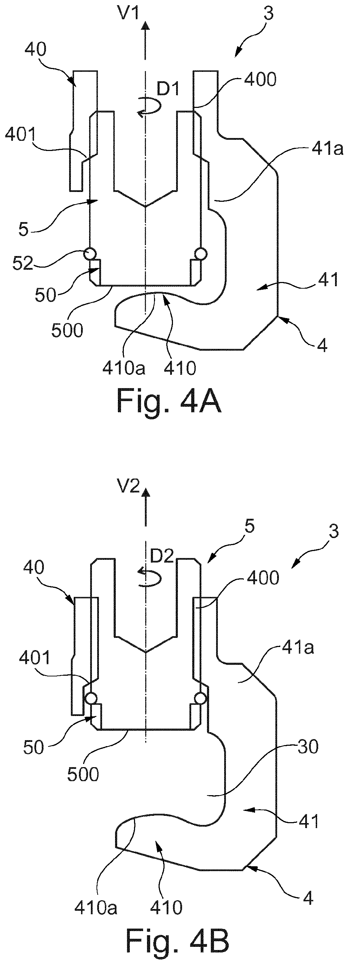

Wie anhand der Schnittdarstellungen der Figuren 4A und 4B veranschaulicht ist, bildet die Schraube 5 an ihrem Klemmkopf 50 eine Kontaktfläche 500 aus, die zur Fixierung des Wuchtelements 3 in flächigen Kontakt mit der Außenseite 220 des axial vorstehenden Befestigungsabschnitts 22 gebracht werden kann. Hierfür ist die Schraube 5 durch Drehung um eine Schraubenachse entlang einer Drehrichtung D1 in eine Verstellrichtung V1 auf den zweiten und im montierten Zustand radial inneren Schenkelabschnitt 410 zu verstellbar. Wird demgegenüber die Schraube 5 in eine entgegengesetzte Drehrichtung D2 gedreht, wird die Schraube 5 in eine entgegengesetzte Verstellrichtung V2 von dem zweiten Schenkelabschnitt 410 weg verlagert und damit ein Abstand zwischen der Kontaktfläche 500 des Klemmkopfes 5 und dem zweiten Schenkelabschnitt 410 vergrößert.

Für den Zusammenbau des Wuchtelements 3 wird die Schraube 5 in den Gewindeabschnitt 40 zunächst so weit eingedreht, dass der Klemmkopf 50 an einem inneren Ende des Gewindeabschnitts 40 hervorsteht. An dem vorstehenden Ende wird dann ein Sicherungselement in Form eines Sicherungsringes 52 angebracht, um die Schraube 5 an dem Wuchtelementkörper 4 axial zu sichern und ein Herausdrehen aus dem Gewindeabschnitt 40 zu verhindern. So begrenzt der Sicherungsring 52 (im Bereich des Klemmkopfes 50) die Verstellbarkeit der Schraube 5 in Richtung der Verstellrichtung V2 relativ zu dem Wuchtelementkörper 4. So schlägt der Sicherungsring 52 an einem Anschlag 401 innerhalb des Gewindeabschnitts 40 an und blockiert eine weitere Verstellung der Schraube 5 entlang der Verstellrichtung V2 über eine vorgegebene Relativlage zwischen dem Klemmkopf 50 und dem zweite Schenkelabschnitt 410 hinaus. Über den Sicherungsring 52 wird auch eine Montageposition der Schraube 5 an dem Wuchtelementkörper 4 vorgegeben, um ein Wuchtelement 3 problemlos an dem Befestigungsabschnitt 22 des Rotors 2 anbringen zu können, sodass ein Teil des Befestigungsabschnitt 22 von dem Umgriffsabschnitt 41 des Wuchtelementkörpers 4 umgriffen ist.

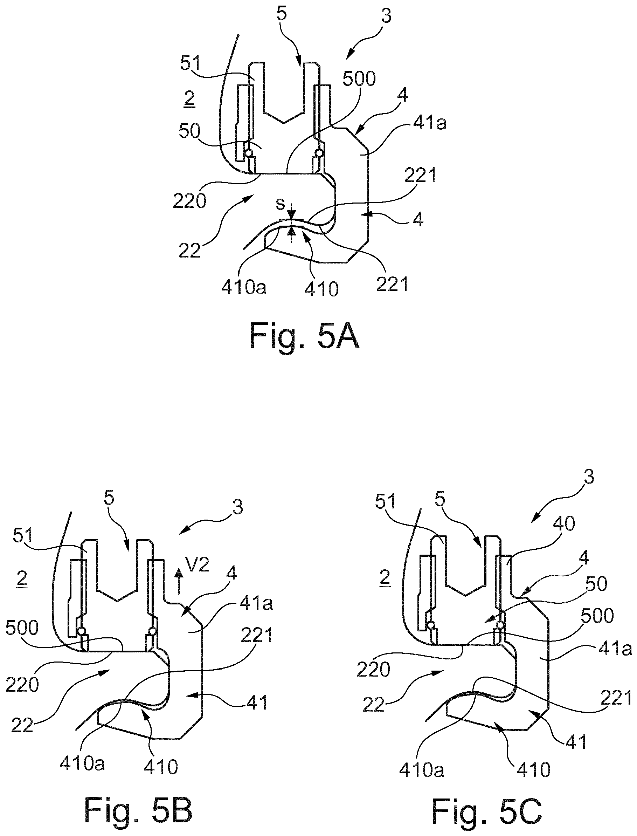

Wie anhand der Figur 5A in Schnittdarstellung veranschaulicht ist, liegt der Klemmkopf der Schraube 5 schwerkraftbedingt nach einem Anbringen des Wuchtelements 3 an den Befestigungsabschnitt 22 an dessen Außenseite 220 flächig an. Der radial innen liegende zweite Schenkelabschnitt 410 des Umgriffsabschnitts 41 ist demgegenüber zur Innenseite 221 des Befestigungsabschnitt 22 noch zumindest geringfügig beabstandet. Zwischen der Unterseite 221 und der konvexen Wölbung 410a des inneren Schenkelabschnitts 410 liegt ein Spalt s vor. Der Wuchtelementkörper 4 ist somit an dem Befestigungsabschnitt 22 noch in Umfangsrichtung U verschieblich, obwohl der Wuchtelementkörper 4 bereit auf den axial vorstehenden Befestigungsabschnitt 22 aufgesteckt ist, sodass ein Teil des Befestigungsabschnitt 22 in einem Montagemaul 30 des Umgriffsabschnitts 41 aufgenommen ist, den die beiden Schenkelabschnitte 41a und 410 zwischen sich definieren (vgl. auch Figur 4B).

Wird nun die Schraube 5 weiter eingedreht und damit der Wuchtelementkörper 4 über das mit dem Außengewinde der Schraube 5 kämmende Innengewinde 400 seines Gewindeabschnitts 40 radial nach außen verlagert, wird einerseits ein Abstand zwischen der Kontaktfläche 500 des Klemmkopfes 50 der Schraube 5 und dem radial inneren Schenkelabschnitt 410 verringert und andererseits der radial innere Schenkelabschnitt 410 gegen die Innenseite 221 des Befestigungsabschnitt 22 gedrückt. Diese Phase bei der Fixierung des Wuchtelements 3 ist anhand der Figur 5B veranschaulicht.

Wurde die Schraube 5 ausreichend stark angezogen, wie dies in Figur 5C veranschaulicht ist, ist das Wuchtelement 3 an dem von seinem Wuchtelementkörper 4 umgriffenen Befestigungsabschnitt 22 nicht nur formschlüssiggehalten, sondern auch klemmend fixiert. Das Wuchtelement 3 ist damit in einer eingenommenen Wuchtposition unbeweglich an dem Befestigungsabschnitt 22 fixiert und kann erst wieder nach einem Lösen der Fixierung durch Drehen der Schraube 5 an dem Rotor 2 verlagert werden.

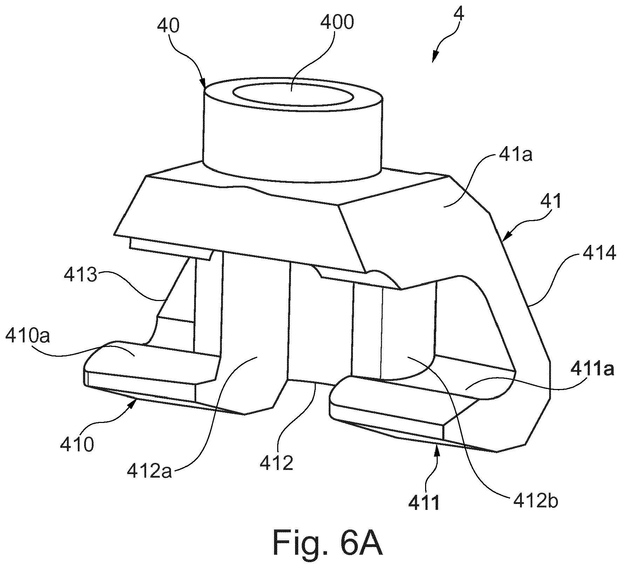

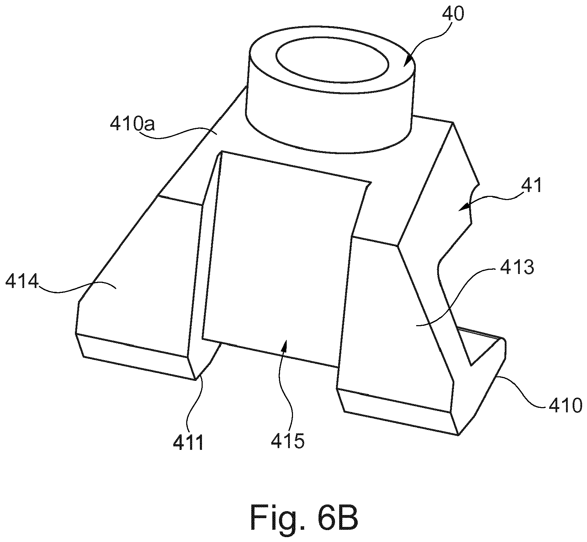

Die Figuren 6A bis 8B zeigen eine weitere Ausführungsvariante eines Wuchtelements 3 mit einem geometrisch gegenüber der Ausführungsvariante der Figuren 2 bis 5C abgewandelten Wuchtelementkörper 4. Der Wuchtelementkörper 4 der Ausführungsvariante der Figuren 6A bis 8B weist in Seitenansicht eine trapezförmige Kontur auf, wobei im montierten Zustand des Wuchtelementkörpers 4 an einen axial vorstehenden Befestigungsabschnitt 22 eines Rotors 2 die längere Seite der trapezförmigen Kontur radial innen liegt. An dieser radial inneren Seite sind vorliegend zwei zweite Schenkelabschnitte 410 und 411 ausgebildet, die durch eine Aussparung 412 voneinander getrennt sind. Jeder der Schenkelabschnitte 410 und 411 weist dabei erneut eine konvexe Wölbung 410a oder 411a für die Anlage an dem Befestigungsabschnitt 22 im fixierten Zustand des Wuchtelements 3 auf. Über die zwei zweiten Schenkelabschnitte 410 und 411 kann der Wuchtelementkörper 4 an zwei entlang der Umfangsrichtung U räumlich separierten Stellen in Kontakt mit einem Befestigungsabschnitt 22 gebracht werden. Über die Aussparung 412 ist dabei Material eingespart. Seitlich berandet wird die Aussparung 412 von zwei sich gegenüberliegenden Querstegen 412a und 412b. Diese Querstege 412a, 412b erstrecken sich zwischen dem jeweiligen zweiten Schenkelabschnitt 410 oder 411 und dem ersten Schenkelabschnitt 41a. Im montierten Zustand des Wuchtelements 3 verlaufen die Querstege 412a, 412b somit im Wesentlichen radial bezüglich der Mittelachse M.

Die trapezförmige Kontur des Wuchtelementkörpers 4 und insbesondere des Umgriffsabschnitts 41 reduziert auftretende Spannungen innerhalb des Wuchtelementkörpers 4, wenn die Schraube 5 angezogen und hierüber das Wuchtelement 3 an der Rotorscheibe 21 fixiert wird. Vor diesem Hintergrund sind auch seitliche, schräg verlaufende Krafteinleitungsabschnitte 413 und 414 an dem Umgriffsabschnitt 41 ausgebildet, die jeweils einen der zweiten Schenkelabschnitte 410 oder 411 mit dem ersten Schenkelabschnitte 41a verbinden, an dem der Gewindeabschnitt 40 mit der Durchgangsöffnung mit dem Innengewinde 400 für die Schraube 5 ausgebildet ist.

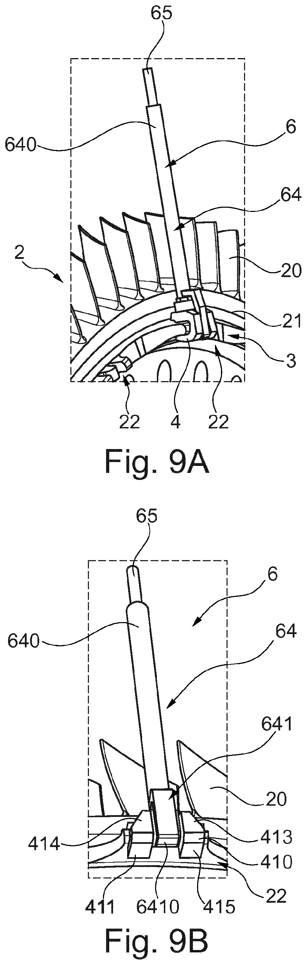

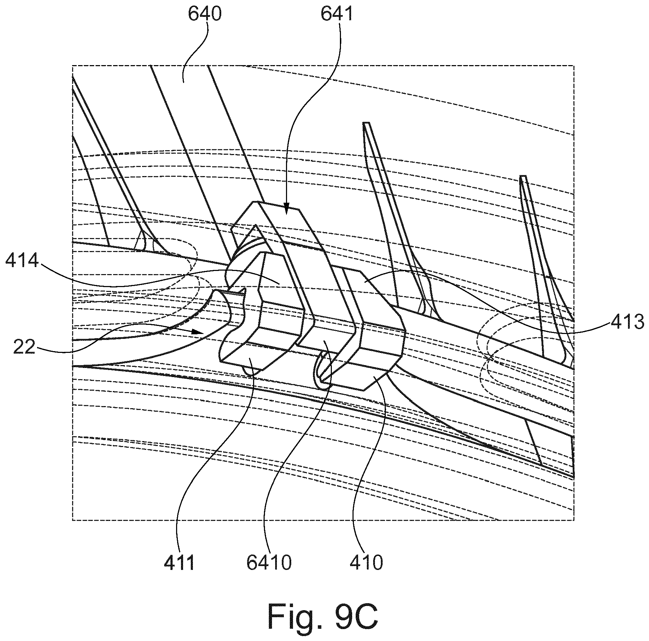

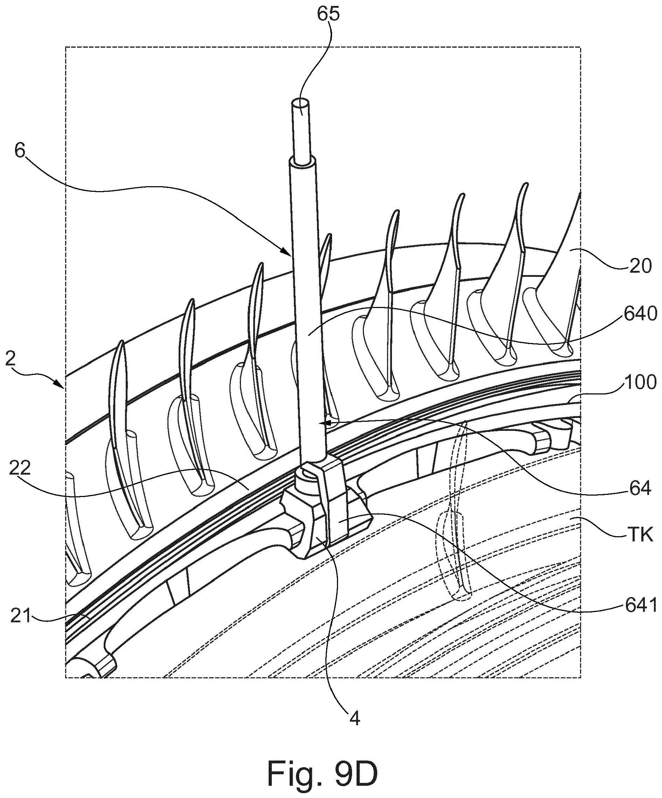

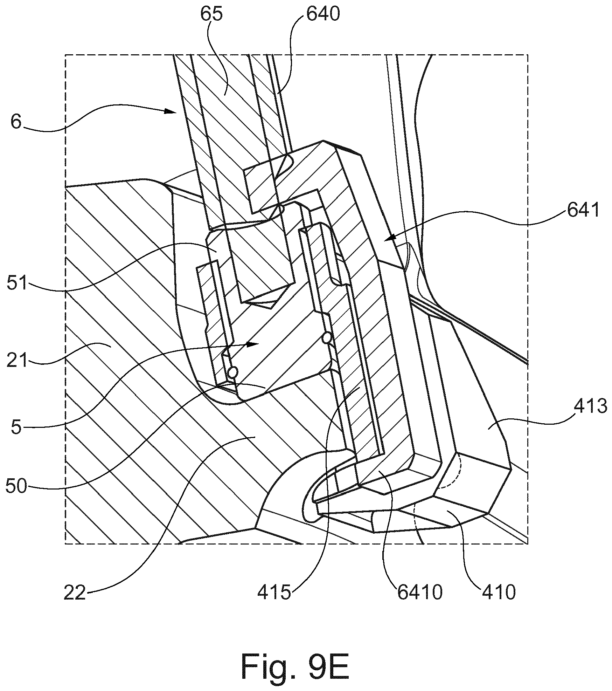

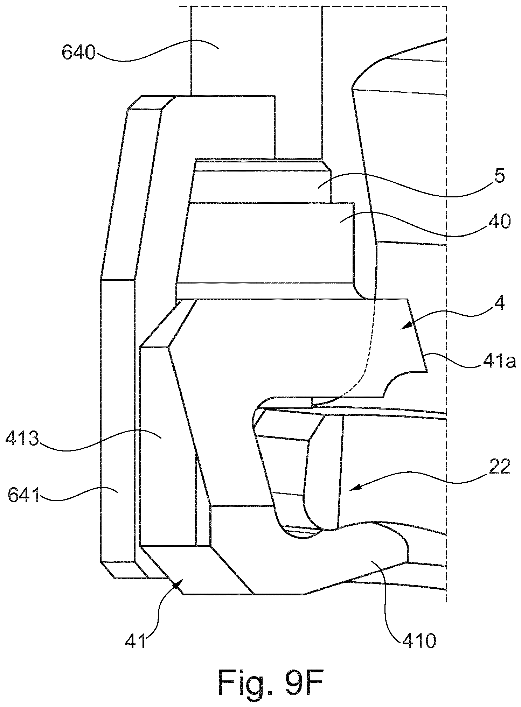

Zwischen diesen seitlichen Krafteinleitungsabschnitten 413 und 414 des Umgriffsabschnitts 41 ist ferner ein Mittelteil 145 ausgebildet, der gegenüber den angrenzenden Krafteinleitungsabschnitten 413 und 414 vertieft oder zurückgesetzt ausgebildet ist. Durch die damit einhergehende lokale Reduzierung einer Wanddicke des Umgriffsabschnitts 41 in einem mittleren Bereich zwischen den beiden Krafteinleitungsabschnitten 413 und 414 ist das Gewicht des Wuchtelementkörpers 4 nochmals reduziert und unterscheidet sich trotz der zwei zweiten Schenkelabschnitte 410 und 411 nur geringfügig von dem Gewicht eines Wuchtelementkörpers 4 mit lediglich einem einzigen zweiten Schenkelabschnitt 410. Über den zurückgesetzten Mittelteil 415 ist ferner eine Schnittstelle für ein Halteteil 64 eines Montagewerkzeug 6 bereitgestellt, mittels dem der Wuchtelementkörper 4 des Wuchtelements 3 an dem Rotor 2 angebracht werden kann. Dies ist anhand der nachfolgend noch erläuterten Figuren 9A bis 9F näher veranschaulicht.

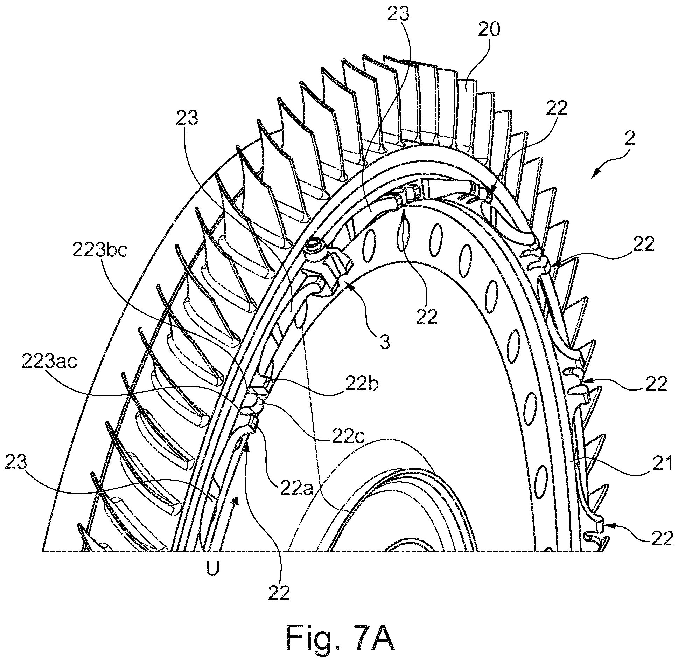

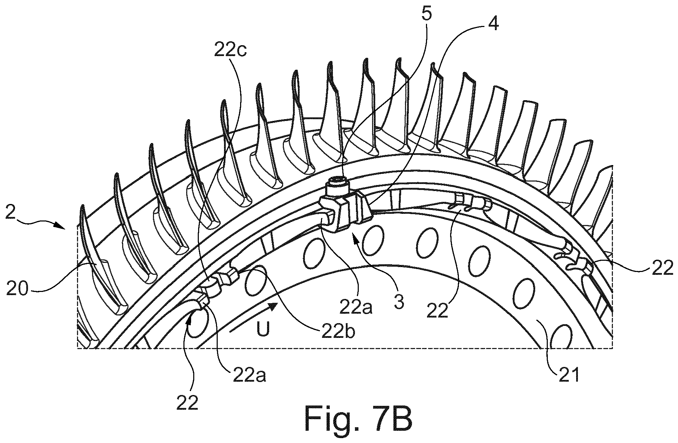

Zur zusätzlichen Gewichtsreduzierung an dem Rotor 2 sieht eine Ausführungsvariante der Rotoranordnung entsprechend den Figuren 7A bis 8B weiter vor, dass an der Rotorscheibe 21 entlang der Umfangsrichtung U mehrere zueinander beabstandete einzelne Befestigungsabschnitte 22 ausgebildet sind. Es wird folglich nicht ein einzelner ringförmiger Befestigungsabschnitt 22 vorgesehen, sondern eine Mehrzahl von über den Umfang der Rotorscheibe 21 verteilter Befestigungsabschnitte 22. Diese Befestigungsabschnitte 22 definieren damit mögliche Wuchtpositionen, an denen ein Wuchtelement 3 bestimmungsgemäß angebracht werden kann. Zwischen je zwei benachbarten Befestigungsabschnitten 22 ist eine Ausnehmung 23 vorgesehen. Diese Ausnehmung 23 stellt jeweils einen Zwischenbereich mit gegenüber dem Befestigungsabschnitt 22 reduzierter axialer Erstreckung dar.

An jedem Befestigungsabschnitt 22 sind drei zungen- oder stegartig axial vorstehende Befestigungsbereiche 22a, 22b und 22c ausgebildet. Ein mittlerer Befestigungsbereich 22c liegt dabei zwischen zwei äußeren Befestigungsbereichen 22a und 22b vor. Zwischen einem äußeren Befestigungsbereich 22a oder 22b und dem mittleren Befestigungsbereiche 22c ist jeweils eine sich in Umfangsrichtung erstreckende Lücke 223ac oder 223bc vorgesehen. In jeder dieser Lücken 223ac, 223bc wird bei einer bestimmungsgemäßen Anbringung des Wuchtelements 3 zumindest teilweise einer der Querstege 412a, 412b des Wuchtelementkörpers 4 aufgenommen.

Die jeweils äußeren Befestigungsbereiche 22a und 22b eines Befestigungsabschnitts 22 sind dabei für die Verbindung mit je einem der zweiten und im montierten Zustand radial inneren Schenkelabschnitte 410 und 411 des Wuchtelementkörpers 4 vorgesehen. Der dazwischen liegende mittlere Befestigungsbereich 22c dient dem Kontakt mit der zur Fixierung vorgesehenen Schraube 5. Ist ein Wuchtelement 3 folglich bestimmungsgemäß an einem Befestigungsabschnitt 22 der Figuren 7A bis 8B fixiert, drückt je ein Schenkelabschnitt 410 oder 411 entlang einer radial nach außen weisenden Richtung gegen eine Innenseite 221 eines äußeren Befestigungsbereichs 22a oder 22c. Über die Kontaktfläche 500 am Klemmkopf 50 drückt wiederum die Schraube 5 an einer Außenseite 220 entlang einer radial nach innen weisenden Richtung gegen den mittleren Befestigungsbereich 22c. Über die Unterteilung eines Befestigungsabschnitts 22 in unterschiedliche Befestigungsbereiche 22a bis 22c ist somit die Position eines hieran festzulegenden Wuchtelements 3 weitestgehend vorgegeben.

Wird bei der Ausführungsvariante einer Rotoranordnung gemäß der Figuren 7A bis 8B eine Fixierung eines Wuchtelements 3 über eine Schraube 5 gelöst, kann das jeweilige Wuchtelement 3 entlang der Umfangsrichtung U zu einem anderen Befestigungsabschnitt 22 verschoben werden. Hierbei kann auch im Bereich der Ausnehmungen 23 der Rotorscheibe 21 jeweils ein zumindest geringfügiger axialer Vorsprung vorhanden sein, der von dem Umgriffsabschnitt 41 des Wuchtelementkörpers 4 umgriffen werden kann und entlang dem damit das Wuchtelement 3 körperlich geführt gehalten ist.

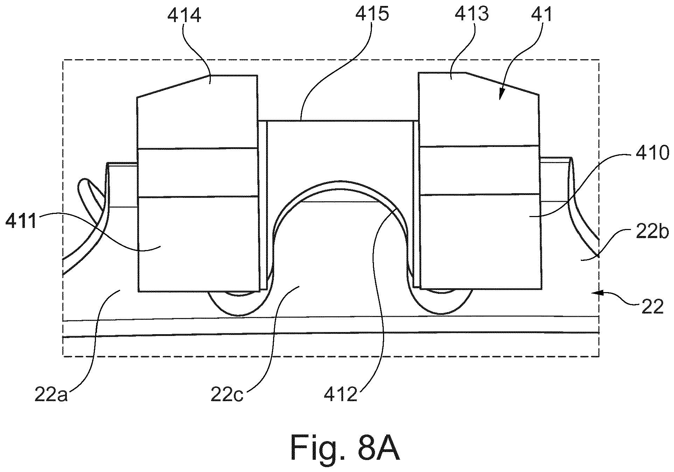

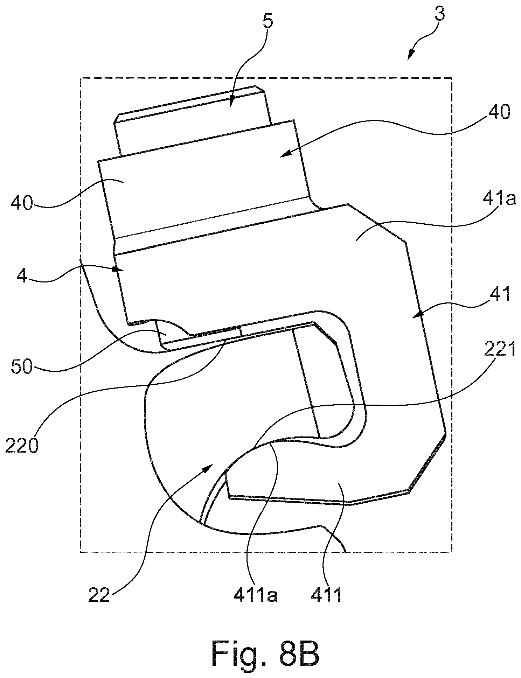

In der neu eingenommenen Wuchtposition sollte dann der Wuchtelementkörper 4 mit seinem Umgriffsabschnitt 41 wieder-wie in der Ansicht der Figur 8A mit Blick auf die radial innen liegende Seite des Befestigungsabschnitt 22 dargestellt - mit seinen zwei zweiten radial inneren Schenkelabschnitten 410 und 411 an den äußeren Befestigungsbereichen 22a und 22b anliegen, sodass in der Aussparung 412 zwischen den zwei zweiten Schenkelabschnitten 22a und 22b der mittlere Befestigungsbereich 22c liegt, gegen den auf der radial äußeren Seite der Klemmkopf 50 der Schraube 5 drückt.

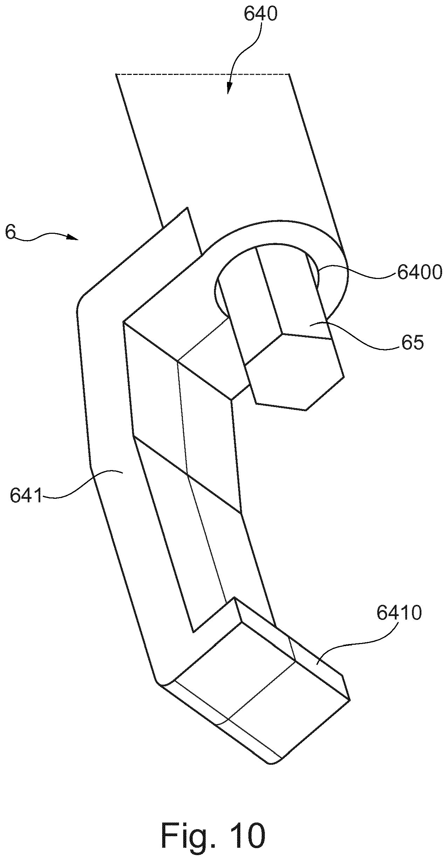

Für die erleichterte Montage eines Wuchtelements 3 kann ein speziell ausgebildetes Montagewerkzeug genutzt sein, mittels dem einerseits der Wuchtelementkörper 4 in Position gebracht wird und andererseits die Schraube 5 zur Fixierung des Wuchtelements 3 angezogen werden kann. Mit den Figuren 9A bis 9F und 10 ist ein Ausführungsbeispiel eines solchen Montagewerkzeugs 6 veranschaulicht.

Das Montagewerkzeug 6 weist ein stabförmiges Halteteil 64 mit einem Hülsenabschnitt 640 auf, an dem ein Nutzer angreifen kann, um ein Wuchtelement 3 zu positionieren und das Montagewerkzeug 3 zu handhaben. An einem Ende des Halteteils 64 ist ferner ein Haltehaken 641 ausgebildet, an dem der Wuchtelementkörper 4 formschlüssig gehalten werden kann. Der Wuchtelementkörper 4 wird hierfür von dem Haltehaken 641 radial im Bereich des zurückgesetzten Mittelteils 415 umgriffen. Für den Umgriff erstreckt sich ein an dem Haltehaken 641 ausgebildeter Steg 6410 quer zum Mittelteil 415 an einer Innenseite des Mittelteils 415 in Richtung der Aussparung 412 des Wuchtelementkörpers 4.

Das Montagewerkzeug 6 ist vorliegend wenigstens zweiteilig ausgeführt und weist zusätzlich zu dem Halteteil 64 ein Drehteil 65 auf. Dieses Drehteil 65 ist stabförmig ausgeführt und in dem Hülsenabschnitt 640 des Halteteils 64 drehbar und entlang einer Längserstreckungsrichtung des Hülsenabschnitts 640 verschieblich gelagert. Die Querschnittsform des Drehteils 65 korrespondiert wenigstens im Bereich eines Endes, das an einer Austrittsöffnung 6400 des Hülsenabschnitts 640 im Bereich des Haltehakens 641 aus dem Hülsenabschnitt 640 hervorstehen kann, mit der Innenkontur der Werkzeugschnittstelle 51 der Schraube 5 an dem Wuchtelement 3. Vorliegend ist das Drehteil 65 beispielsweise mit einem Sechskantprofil ausgebildet, um formschlüssig an der Werkzeugschnittstelle 51 der Schraube 5 eingreifen zu können.

Ist das Wuchtelement 3 mit dem Montagewerkzeug 6 an der Rotorscheibe 21 angebracht worden, sodass der Wuchtelementkörper 4 des an dem Haltehaken 641 gehaltenen Wuchtelementkörpers 4 einen Befestigungsabschnitt 22 umgreift, ist ein Abschnitt des Drehteils 65, zum Beispiel an einem radial äußeren Ende des Hülsenabschnitts 640, zugänglich, sodass ein Nutzer das Drehteil 65 relativ zu dem Halteteil 64 drehen kann. Durch Drehung des Drehteils 54 wird dann die damit im Eingriff stehende Schraube 5 gedreht und damit das Wuchtelement 3 an dem Befestigungsabschnitt 22 fixiert oder eine solche Fixierung gelöst. Indem der Wuchtelementkörper 4 an dem Haltehaken 641 des Montagewerkzeugs 6 formschlüssig gehalten ist, kann das Montagewerkzeug 6 bei gelöster Fixierung auch dazu genutzt werden, das Wuchtelement 3 in eine andere Wuchtposition an der Rotorscheibe 21 zu verschieben.

Um das Montagewerkzeug 6 von dem bestimmungsgemäß fixierten Wuchtelement 3 zu entfernen, wird das stabförmige Drehteil 65 radial nach außen gezogen. Das mit der Schraube 5 in Eingriff zu bringende Ende des Drehteils 65 wird dabei in eine an dem radial inneren Ende ausgebildete Austrittsöffnungen 6400 des Hülsenabschnitts 640 eingezogen (vgl. Figur 10), sodass Drehteil 65 und die Schraube 5 des Wuchtelement 3 nicht mehr in Eingriff stehen. Im Anschluss wird das Halteteil 64 soweit verkippt, dass der Steg 6410 des Haltehakens 641 den Mittelteil 415 des Umgriffsabschnitts 41 nicht mehr umgreift. Daraufhin kann das Montagewerkzeug 6 von dem Wuchtelement 3 über den Montagespalt 100 entfernt werden. Über den Montagespalt 100 kann dabei das Montagewerkzeug 6 auch im montierten Zustand des Rotors 2 wieder an das Wuchtelement 3 herangeführt werden, die Fixierung lösen und das Wuchtelement 3 in eine andere Wuchtposition verlagern.

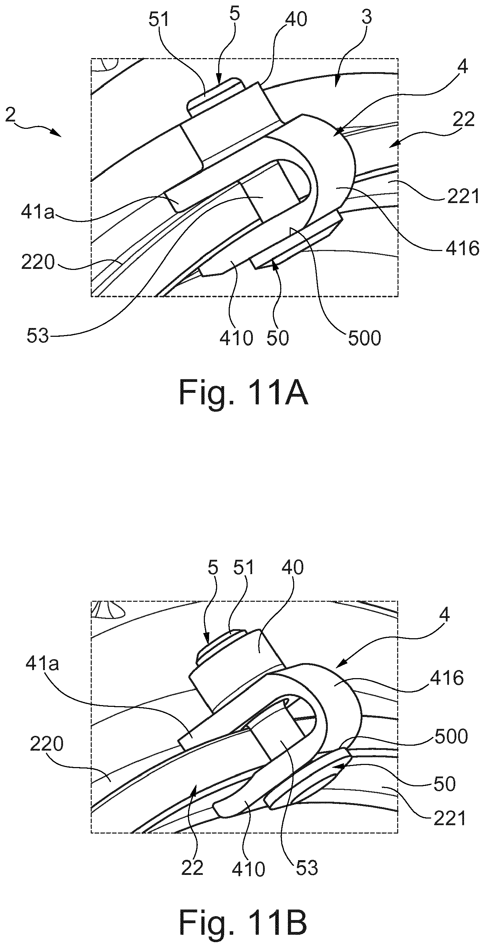

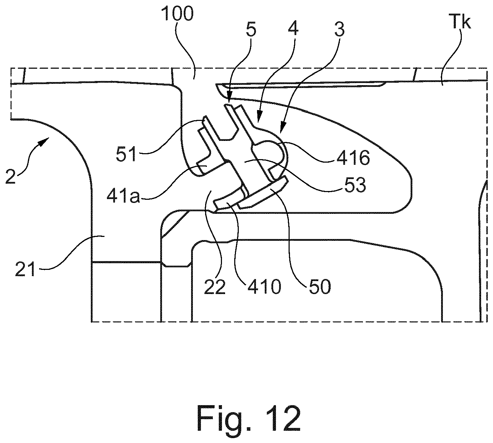

Bei der mit den Figuren 11A-11B und 12 veranschaulichten Ausführungsvariante einer Rotoranordnung ist ein alternativ ausgestaltetes mehrteiliges Wuchtelement 3 vorgeschlagen. Bei dieser Variante liegen zur Fixierung des Wuchtelements 3 an einem axial vorstehenden Befestigungsabschnitt 22 der Rotorscheibe 21 nicht ein Klemmkopf 50 und wenigstens ein Schenkelabschnitt 410 oder 411 an dem Befestigungsabschnitt 22 an. Vielmehr sind hier zwei sich gegenüberliegende Schenkelabschnitte 41a und 410 zur klemmenden Anlage an dem Befestigungsabschnitt 22 vorgesehen. Ein Fixierungselement in Form einer Schraube 5 für die klemmende Fixierung eines Wuchtelementkörpers 4, der an einem Umgriffsabschnitt 41 die beiden Schenkelabschnitte 41a und 410 ausgebildet, ist hierbei dann zur Verringerung des Abstands zwischen den ersten und zweiten Schenkelabschnitten 41a und 410 vorgesehen.

Die Schraube 5 erstreckt sich durch eine Durchgangsöffnung an dem im montierten Zustand radial inneren zweiten Schenkelabschnitt 410 und hintergreift diesen zweiten Schenkelabschnitte 410 mit einem Klemmkopf 50. Die an dem Klemmkopf 50 der Schraube 5 ausgebildete Kontaktfläche 500 liegt somit an einer radial inneren Seite des zweiten Schenkelabschnitts 410 an. Wird die Schraube 5 über ihre Werkzeugschnittstelle 51 gedreht, sodass die Schraube 5 in einer radial nach außen weisende Richtung verlagert wird, drückt der Klemmkopf 50 gegen den zweiten radial inneren Schenkelabschnitt 410 und drückt diesen in Richtung des anderen, ersten radial äußeren Schenkelabschnitts 41a. Der von Schenkelabschnitten 41a, 410 des Umgriffsabschnitts 41 des Wuchtelementkörpers 4 umgriffene Teil des Befestigungsabschnitt 22 wird derart zwischen den beiden Schenkelabschnitten 41a und 410 verklemmt.

Um eine gegebenenfalls elastische Verlagerung der beiden Schenkelabschnitte 41a und 410 aufeinander zu und voneinander weg über die Drehung der Schraube 5 zu gestatten, sind diese über einen vorliegend konvex gewölbten Verbindungsabschnitt 416 miteinander verbunden, der eine Verlagerung des einen Schenkelabschnitts 410 relativ zu dem anderen Schenkelabschnitt 41a gestattet.

Um an dem (Blisk-) Rotor 2 keine Bohrungen für die Schraube 5 des Wuchtelements 3 vorsehen zu müssen, verläuft ein sich zwischen den Schenkelabschnitten 41a und 410 erstreckender Schaft 53 der Schraube 5 axial versetzt zu einer Stirnseite des Befestigungsabschnitt 22. Der Schaft 53 der Schraube 5 erstreckt sich somit an dem Befestigungsabschnitt 22 vorbei und nicht durch diesen hindurch.

In einer möglichen Weiterbildung der Ausführungsvariante der Figuren 11A-11B und 12 kann der Wuchtelementkörper 4 in Analogie zu der Ausführungsvariante der Figuren 6A-6B auch mit zwei radial inneren Schenkelabschnitten 410 und 411 ausgebildet sein. Die Schenkelabschnitte wäre dann folglich über die Drehung der Schraube 5 in Richtung eines (einzigen) radial äußeren Schenkelabschnitts 41a verlagerbar und könnte damit gegen den Befestigungsabschnitt 22 gedrückt werden (insbesondere gegen einen unterteilten Befestigungsabschnitt entsprechend den Figuren 7A bis 8B), um das Wuchtelement 3 lösbar in einer gewünschten Wuchtposition an der Rotorscheibe 21 des Rotors 1 zu fixieren.

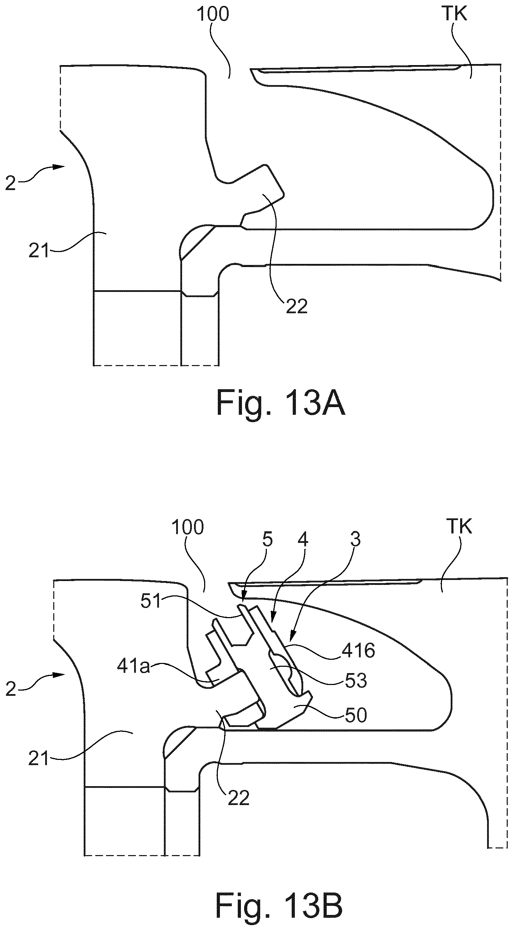

Bei der in den verschiedenen Ansichten der Figuren 13A und 13B veranschaulichten Ausführungsvariante einer Rotoranordnung ist in Analogie zu der Ausführungsvariante der Figuren 11A-11B und 12 erneut ein Wuchtelement 3 mit sich gegenüberliegenden Schenkelabschnitten 41a und 410 vorgesehen, die über eine Schraube 5 als Fixierungselement einander angenähert werden können, um das Wuchtelement 3 an dem Befestigungsabschnitt 22 zu fixieren. Der Klemmkopf 50 der Schraube 5 hintergreift auch hier den radial inneren Schenkelabschnitt 410 und drückt damit den Schenkelabschnitt 410 beim Drehen der Schraube 5 an den Befestigungsabschnitt 22. Im Unterschied zur Variante der Figuren 11A bis 11B und 12 ist hier der Wuchtelementkörper 4 mit einem allenfalls kaum oder nicht gewölbten Verbindungsabschnitt 416 versehen, der die beiden Schenkelabschnitte 41a und 410 miteinander verbindet. Hierdurch ist der Wuchtelementkörper 4 schlanker und benötigt weniger Bauraum. Für die Verlagerbarkeit der beiden Schenkelabschnitte 41a und 410 zueinander ist an dem Verbindungsabschnitt 416 eine reduzierte Wandstärke vorgesehen und damit gezielt eine gewisse Flexibilität eingebracht.

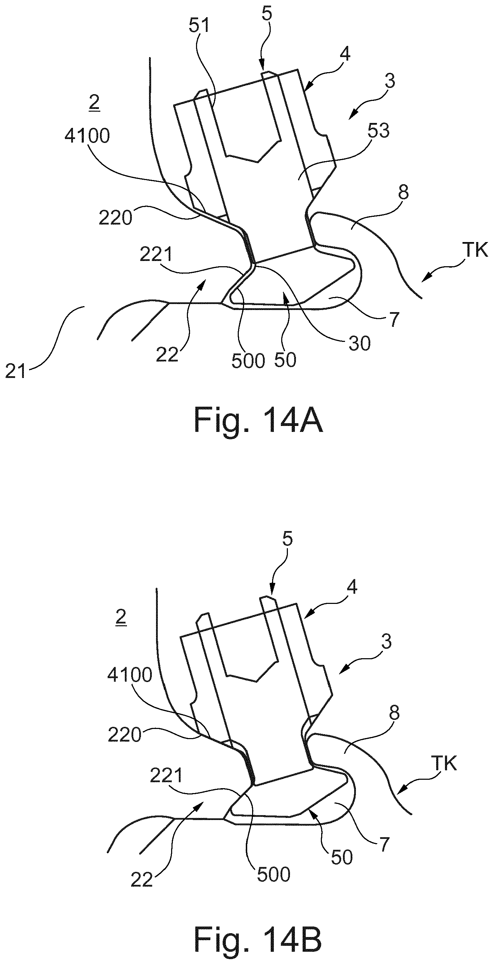

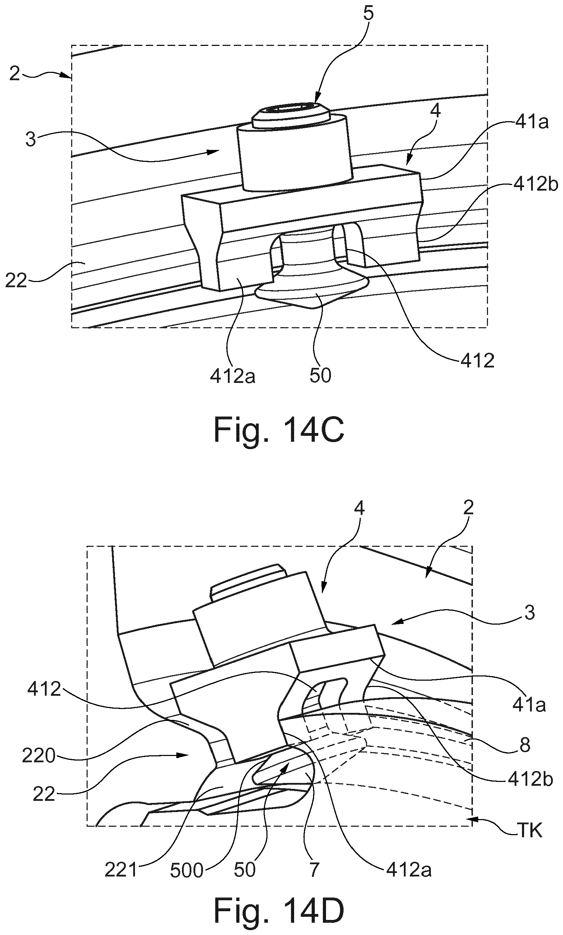

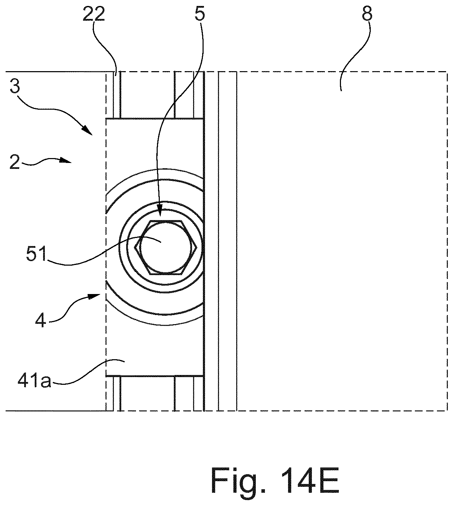

Bei der Ausführungsvariante einer Rotoranordnung, die in den Figuren 14A bis 14E in verschiedenen Ansichten dargestellt ist, wird der axial vorstehende Befestigungsabschnitt 22 von einem bestimmungsgemäß montierten Wuchtelement 3 umgriffen, indem an der radial außen liegenden Außenseite 220 des Befestigungsabschnitt 22 ein Abschnitt des Wuchtelementkörpers 4 und auf der radial innen liegenden Innenseite 221 des Befestigungsabschnitt 22 ein Abschnitt des Fixierungselements - hier in Form des Klemmkopfes 50 der Schraube 5 - anliegt. Der Befestigungsabschnitt 22 ist hier folglich zwischen dem Wuchtelementkörper 4 und einem Abschnitt des Fixierungselements 5 eingefasst und zwischen diesen verklemmt, wenn das Wuchtelement 3 bestimmungsgemäß fixiert ist. Ein Montagemaul 30 des Wuchtelements 3, in dem der umgriffene Teil des Befestigungsabschnitt 22 aufgenommen wird, wird hier folglich durch einen Abschnitt des Wuchtelementkörpers 4 und den Klemmkopf 50 der Schraube 5 gebildet.

Wie in der Zusammenschau der Figuren 14A bis 14E dargestellt ist, hintergreift der Klemmkopf 50 der Schraube 5 den Befestigungsabschnitt 22 und liegt im bestimmungsgemäß fixierten Zustand des Wuchtelements 3 über seine Kontaktfläche 500 unmittelbar an der Innenseite 221 des Befestigungsabschnitt 22 an. An der gegenüberliegenden Außenseite 220 liegt dann der Wuchtelementkörper 4 über eine Anlagefläche 4100 an dem Befestigungsabschnitt 22 an. Der Klemmkopf 50 ist vorliegend diskusförmig ausgestaltet und weist damit eine für die Anlage an dem Befestigungsabschnitt 22 vorgesehene Kontaktfläche 500 auf, die geneigt zur Erstreckungsebene des Schaftes 53 der Schraube 5 verläuft. Ebenso ist die Anlagefläche 4100 des Wuchtelementkörpers 4 angeschrägt. Sowohl im Fall der Kontaktfläche 500 des Klemmkopfes 50 als auch im Fall der Anlagefläche 4100 des Wuchtelementkörpers 4 korrespondiert die jeweilige Anschrägung mit einem entsprechend geneigtem Verlauf der Innenseite 221 oder der Außenseite 220 des Befestigungsabschnitts 22, sodass beim Anziehen der Schraube 5 beiderseits des Befestigungsabschnitts 22 eine Keilverbindung bereitgestellt wird und sich das Wuchtelement 3 selbsttätig am Befestigungsabschnitt 22 ausrichtet. Dies ist insbesondere anhand der geschnittenen Ansichten der Figuren 14A und 14B veranschaulicht.

Hierbei ist in der Figur 14A das Wuchtelement 3 in einer Position dargestellt, in der die Schraube 5 noch nicht angezogen ist. Dementsprechend bleibt sowohl zwischen der Kontaktfläche 4100 des Wuchtelementkörpers 4 und der Außenseite 220 des Befestigungsabschnitt 22 noch ein Spalt wie auch zwischen der Kontaktfläche 500 des Klemmkopfes 50 und der Innenseite 221 des Befestigungsabschnitt 22. Das Wuchtelement 3 ist somit an dem Befestigungsabschnitt 22 noch verschieblich gehalten. Die Figur 14B veranschaulicht dann das durch Anziehen der Schraube 5 klemmend an dem Befestigungsabschnitt 22 fixierte Wuchtelement 3.

Die Anlagefläche 4100 des Wuchtelementkörpers 4 ist an einem (äußeren) Schenkelabschnitt 41a ausgebildet, der dem Klemmkopf 50 gegenüberliegt. Von diesem Schenkelabschnitt 41a stehen radial nach innen zwei durch eine Aussparung 412 voneinander getrennte Querstege 412a, 412b hervor. Diese Querstege 412a und 412b stehen somit bei bestimmungsgemäßer Montage des Wuchtelements 3 an die Rotorscheibe 21 radial nach innen von dem Schenkelabschnitt 41a vor. Jeder dieser Querstege 412a und 412b erstreckt sich in Richtung der radial innen liegenden Innenseite 221 des Befestigungsabschnitt 22, wenn das Wuchtelement 3 bestimmungsgemäß an dem Befestigungsabschnitt 22 angebracht wurde, ohne jedoch den Befestigungsabschnitt 22 zu umgreifen.

Das Paar von Querstegen 412a und 412b sperrt das Wuchtelement 3 gegen eine Verdrehung, wenn dieses an dem Befestigungsabschnitt 22 angebracht wurde. Darüber hinaus stellen die beiden Querstege 412a und 412b die körperliche Führung des Wuchtelementkörpers 4 an dem Befestigungsabschnitt 22 entlang der Umfangsrichtung U sicher, sodass auch hier der Wuchtelementkörper 4 an dem ringförmig vorstehenden Befestigungsabschnitt 22 entlang in die gewünschte Wuchtposition verschoben werden kann, bis die Schraube 5 angezogen wird.

Die Querstege 412a und 412b erstrecken sich vorliegend beiderseits des Schaftes 53 der Schraube 5. Das in den Klemmkopf 50 übergehende Ende des Schaftes 53 läuft somit innerhalb der Aussparung 412 des Wuchtelementkörpers 4, die durch die sich gegenüberliegenden Querstege 412a und 412b berandet ist.

Bei der Rotoranordnung der Figuren 14A bis 14E ist der Klemmkopf 50 im bestimmungsgemäß zusammengebauten Zustand des Triebwerks T ferner in einem Ringspalt 7 aufgenommen, der durch den axial vorstehenden Befestigungsabschnitt 22 des Rotors 2 einerseits und einen axialen Vorsprung 8 der weiteren Triebwerkskomponente TK andererseits gebildet ist. Sind der Rotor 2 und die Triebwerkskomponente TK bestimmungsgemäß montiert, übergreift der vorzugsweise ringförmig in Richtung der Rotorscheibe 21 vorstehende Vorsprung 8 der Triebwerkskomponente TK den Klemmkopf 50. Der Klemmkopf 50 ist damit in der radial nach außen weisenden Richtung einerseits der Innenseite 221 des Befestigungsabschnitts 22 und andererseits (axial beabstandet hierzu) einer Unterseite des Vorsprungs 8 zugewandt.

Bei der Montage des Triebwerks T respektive einer den Rotor 2 und die weitere Triebwerkskomponente TK aufweisenden Rotorbaugruppe wird das Wuchtelement 3 zunächst an dem Befestigungsabschnitt 22 der Rotorscheibe 21 festgelegt, sodass der Befestigungsabschnitt 22 von dem Wuchtelementkörper 4 und dem Klemmkopf 50 der Schraube 5 umgriffen ist, ohne hierbei das Wuchtelement 3 an dem Befestigungsabschnitt 22 endgültig zu fixieren. Das Wuchtelement 3 ist somit an dem Befestigungsabschnitt 22 verliersicher gehalten, aber noch entlang des Umfangs an dem Befestigungsabschnitt 22 verschieblich. Anschließend erfolgt der Zusammenbau der Rotorbaugruppe, bei der der Rotor 2 eine Stufe und die weitere Triebwerkskomponenten TK eine weitere Stufe des Hochdruckverdichters 14 bilden. Hierdurch wird der Ringspalt 7 gebildet, in dem der Klemmkopf 50 dann vollständig aufgenommen ist. Das Wuchtelement 3 kann weiterhin in Umfangsrichtung U in eine gewünschte Wuchtposition verschoben werden und anschließend unter Anziehen der Schraube 5 klemmend an dem Befestigungsabschnitt 22 des Rotors 2 fixiert werden. Wie anhand der Figuren 14A bis 14E ersichtlich ist, bleibt hierfür die Werkzeugschnittstelle 51 der Schraube 5 auch nach dem Zusammenbau des Rotors 2 und der Triebwerkskomponente TK weiterhin von radial außen zugänglich.

### Bezugszeichenliste

- 100: Montagespalt
- 11: Einlass / Intake
- 12: Fan
- 13: Mitteldruckverdichter
- 14: Hochdruckverdichter
- 15: Brennkammer
- 16: Hochdruckturbine
- 17: Mitteldruckturbine
- 18: Niederdruckturbine
- 19: Auslass
- 2: Rotor
- 20: Rotorschaufel
- 21: Rotorscheibe
- 22: Befestigungsabschnitt
- 220: Außenseite
- 221: Innenseite
- 223ac, 223bc: Lücke
- 22a, 22b: Äußerer Befestigungsbereich
- 22c: Mittlerer Befestigungsbereich
- 23: Ausnehmung (Zwischenbereich mit reduzierter axialer Erstreckung)
- 3: Wuchtelement
- 30: Montagemaul
- 4: Wuchtelementkörper
- 40: Gewindeabschnitt
- 400: Innengewinde
- 401: Absatz
- 41: Umgriffsabschnitt
- 41a: Äußerer Schenkelabschnitt
- 410, 411: Innerer Schenkelabschnitt
- 410a, 411a: Wölbung
- 4100: Anlagefläche
- 412: Aussparung
- 412a, 412b: Quersteg
- 413, 414: Kraftleitungsabschnitt
- 415: Mittelteil
- 416: Verbindungsabschnitt
- 5: Schraube (Fixierungselement)
- 50: Klemmkopf
- 500: Kontaktfläche
- 51: Werkzeugschnittstelle
- 52: Sicherungsring (Sicherungselement)
- 53: Schaft
- 6: Montagewerkzeug
- 64: Halteteil
- 640: Hülsenabschnitt
- 6400: Austrittsöffnung
- 641: Haltehaken
- 6410: Steg
- 65: Drehteil
- 7: Ringspalt
- 8: Vorsprung
- A: Primärstromkanal
- B: Sekundär- / Bypasskanal
- D1, D2: Drehrichtung
- K: Kerntriebwerk
- M: Mittel- / Rotationsachse
- s: Spalt
- T: Gasturbinentriebwerk
- TK: Triebwerkskomponente
- U: Umfangsrichtung
- V1, V2: Verstellrichtung

## Patentansprüche

1. Rotoranordnung, mit
- einem Rotor (2) für ein Triebwerk (T), der eine sich entlang einer Umfangsrichtung (U) um eine Mittelachse (M) erstreckende Rotorscheibe (21) aufweist, und
- mindestens einem Wuchtelement (3), das an der Rotorscheibe (21) zum Auswuchten des Rotors (2) angebracht ist,
wobei
- an der Rotorscheibe (21) mindestens ein axial bezüglich der Mittelachse (M) vorstehender Befestigungsabschnitt (22) ausgebildet ist und
- das mindestens eine Wuchtelement (3) den axial vorstehenden Befestigungsabschnitt (22) umgreift,
**dadurch gekennzeichnet, dass**
das mindestens eine Wuchtelement (3) einen Wuchtelementkörper (4) und ein relativ zu dem Wuchtelementkörper (4) verstellbares Fixierungselement (5) umfasst und das Fixierungselement (5) zur Fixierung des Wuchtelements (3) an dem Befestigungsabschnitt (22) derart eingerichtet und relativ zu dem Wuchtelementkörper (4) verstellbar gelagert ist, dass das Fixierungselement (5) mit dem Befestigungsabschnitt (22) in Kontakt gebracht werden kann.

2. Rotoranordnung nach Anspruch 1, **dadurch gekennzeichnet, dass** das mindestens eine Wuchtelement (3) einen Wuchtelementkörper (4) mit einem Umgriffsabschnitt (41) aufweist, mittels dem das Wuchtelement (3) den axial vorstehenden Befestigungsabschnitt (22) umgreift.

3. Rotoranordnung nach Anspruch 2, **dadurch gekennzeichnet, dass** der Umgriffsabschnitt (41) mindestens einen bezüglich der Mittelachse (M) radial äußeren ersten Schenkelabschnitt (41a) und mindestens einen radial inneren zweiten Schenkelabschnitt (410, 411) aufweist und zwischen den ersten und zweiten Schenkelabschnitten (41a; 410, 411) wenigstens ein Teil des axial vorstehenden Befestigungsabschnitts (22) aufgenommen ist.

4. Rotoranordnung nach Anspruch 3, **dadurch gekennzeichnet, dass** wenigstens einer der ersten und zweiten Schenkelabschnitte (41a; 410, 411) eine in Richtung des Befestigungsabschnitts (22) konvexe Wölbung (410a, 411a) aufweist.

5. Rotoranordnung nach einem der vorhergehenden Ansprüche, **dadurch gekennzeichnet, dass** das Wuchtelement (3) den axial vorstehenden Befestigungsabschnitt (22) mittels wenigstens eines Abschnitts (41a) des Wuchtelementkörpers (4) und wenigstens eines Abschnitts (50) des Fixierungselements (5) umgreift.

6. Rotoranordnung nach Anspruch 3, **dadurch gekennzeichnet, dass** das Fixierungselement (5) zur Fixierung des Wuchtelements (3) an dem Befestigungsabschnitt (22) derart eingerichtet und relativ zu dem Wuchtelementkörper (4) verstellbar gelagert ist, dass ein radialer Abstand der ersten und zweiten Schenkelabschnitte (41a; 410) durch Verstellen des Fixierungselements (5) veränderbar ist.

7. Rotoranordnung nach Anspruch 6, **dadurch gekennzeichnet, dass** sich das Fixierungselement (5) mit einem Abschnitt (53) radial bezüglich der Mittelachse (M) zwischen den ersten und zweiten Schenkelabschnitten (41a, 410) erstreckt.

8. Rotoranordnung nach Anspruch 7, **dadurch gekennzeichnet, dass** sich der sich zwischen den ersten und zweiten Schenkelabschnitten (41a, 410) erstreckende Abschnitt (53) des Fixierungselements (5) nicht durch den Befestigungsabschnitt (22) hindurch, sondern an diesem vorbei erstreckt.

9. Rotoranordnung nach einem der vorhergehenden Ansprüche, **dadurch gekennzeichnet, dass** das Fixierungselement (5) eine Kontaktfläche (500) ausbildet, über die das Fixierungselement (5) zur Fixierung des Wuchtelements (3) an dem Befestigungsabschnitt (22) auf einen der ersten und zweiten Schenkelabschnitte (41a, 410) oder den axial vorstehenden Befestigungsabschnitt (22) einwirkt.

10. Rotoranordnung nach einem der vorhergehenden Ansprüche, **dadurch gekennzeichnet, dass**
- der Umgriffsabschnitt (41) in einer Seitenansicht entlang der Mittelachse (M) gesehen eine trapezförmige Kontur aufweist und/oder
- das mindestens eine Wuchtelement (3) einen Wuchtelementkörper (4) mit einem Umgriffsabschnitt (41) aufweist, mittels dem das Wuchtelement (3) den axial vorstehenden Befestigungsabschnitt (22) umgreift, wobei
∘ der Umgriffsabschnitt (41) mindestens einen bezüglich der Mittelachse (M) radial äußeren ersten Schenkelabschnitt (41a) und mindestens einen radial inneren zweiten Schenkelabschnitt (410, 411) aufweist und zwischen den ersten und zweiten Schenkelabschnitten (41a; 410, 411) wenigstens ein Teil des axial vorstehenden Befestigungsabschnitts (22) aufgenommen ist, und
∘ der Umgriffsabschnitt (41) zwei zweite radial innere Schenkelabschnitte (410, 411) aufweist, die einem ersten radial äußeren Schenkelabschnitt (41a) gegenüberliegen.

11. Verfahren zur Montage eines Wuchtelements (3) an einem um eine Mittelachse (M) drehbaren Rotor (2), der eine Rotorscheibe (21) mit mindestens einem bezüglich der Mittelachse (M) axial vorstehenden Befestigungsabschnitt (22) aufweist, wobei das Verfahren wenigstens die folgenden Schritte aufweist:
- Bereitstellen eines Wuchtelements (3) mit einem Montagemaul (30) und
- Anbringen des Wuchtelements (3) an dem mindestens einen Befestigungsabschnitt (22), sodass der Befestigungsabschnitt (22) von dem Wuchtelement (3) umgriffen ist und wenigstens ein Teil des Befestigungsabschnitts (22) in dem Montagemaul (30) aufgenommen ist,
**dadurch gekennzeichnet, dass**
das Wuchtelement (3) einen Wuchtelementkörper (4) und ein hieran verstellbar gelagertes Fixierungselement (5) aufweist, wobei das den Befestigungsabschnitt (22) umgreifende Montagemaul (30) durch einen Abschnitt (41a) des Wuchtelementkörpers (4) und einen Abschnitt (50) des Fixierungselements (5) definiert ist

12. Verfahren nach Anspruch 11, **dadurch gekennzeichnet, dass**
- zur Fixierung des Wuchtelements (3) in einer Wuchtposition an dem Befestigungsabschnitt (22) ein verstellbar gelagertes Fixierungselement (5) des Wuchtelements (3) verstellt wird und/oder
- zum Anbringen des Wuchtelementkörpers (4) an den Befestigungsabschnitt (22) ein Montagewerkzeug (6) genutzt wird, an dem ein Wuchtelementkörper (4) des Wuchtelements (3) formschlüssig gehalten ist und mittels dem der Wuchtelementkörper (4) ferner in die Wuchtposition verschoben wird.

## Claims

1. Rotor arrangement having
- a rotor (2) for an engine (T), which has a rotor disc (21) extending along a circumferential direction (U) about a central axis (M), and
- at least one balancing element (3), which is attached to the rotor disc (21) for the purpose of balancing the rotor (2),
wherein
- at least one fastening section (22), which projects axially with respect to the central axis (M), is formed on the rotor disc (21), and
- the at least one balancing element (3) engages around the axially projecting fastening section (22),
**characterized in that**
the at least one balancing element (3) comprises a balancing element body (4) and a fixing element (5) which is adjustable relative to the balancing element body (4), and the fixing element (5), for fixing the balancing element (3) on the fastening section (22), is configured, and is mounted so as to be adjustable relative to the balancing element body (4), such that the fixing element (5) can be brought into contact with the fastening section (22) .

2. Rotor arrangement according to Claim 1, **characterized in that** the at least one balancing element (3) has a balancing element body (4) having an engagement section (41) by means of which the balancing element (3) engages around the axially projecting fastening section (22).

3. Rotor arrangement according to Claim 2, **characterized in that** the engagement section (41) has at least one first limb section (41a), which is in a radially outer position with respect to the central axis (M), and at least one radially inner second limb section (410, 411), and at least a part of the axially projecting fastening section (22) is held between the first and second limb sections (41a; 410, 411).

4. Rotor arrangement according to Claim 3, **characterized in that** at least one of the first and second limb sections (41a; 410, 411) has a curved portion (410a, 411a) which is convex in the direction of the fastening section (22).

5. Rotor arrangement according to one of the preceding claims, **characterized in that** the balancing element (3) engages around the axially projecting fastening section (22) by means of at least one section (41a) of the balancing element body (4) and at least one section (50) of the fixing element (5).

6. Rotor arrangement according to Claim 3, **characterized in that** the fixing element (5), for fixing the balancing element (3) on the fastening section (22), is configured, and is mounted so as to be adjustable relative to the balancing element body (4), such that a radial spacing between the first and second sections (41a; 410) is variable by adjustment of the fixing element (5).

7. Rotor arrangement according to Claim 6, **characterized in that** the fixing element (5) extends with a section (53) radially with respect to the central axis (M) between the first and second limb sections (41a, 410).

8. Rotor arrangement according to Claim 7, **characterized in that** the section (53) of the fixing element (5) that extends between the first and second limb portions (41a, 410) extends not through the fastening section (22) but past it.

9. Rotor arrangement according to one of the preceding claims, **characterized in that** the fixing element (5) forms a contact surface (500) via which the fixing element (5), for fixing the balancing element (3) on the fastening section (22), acts on one of the first and second limb sections (41a, 410) or on the axially projecting fastening section (22).

10. Rotor arrangement according to one of the preceding claims, **characterized in that**
- the engagement section (41) has, in a side view as seen along the central axis (M), a trapeziform contour, and/or
- the at least one balancing element (3) has a balancing element body (4) having an engagement section (41) by means of which the balancing element (3) engages around the axially projecting fastening section (22), wherein
∘ the engagement section (41) has at least one first limb section (41a), which is in a radially outer position with respect to the central axis (M), and at least one radially inner second limb section (410, 411), and at least a part of the axially projecting fastening section (22) is held between the first and second limb sections (41a; 410, 411), and
∘ the engagement section (41) has two second, radially inner limb sections (410, 411), which are opposite a first, radially outer limb section (41a).

11. Method for fitting a balancing element (3) on a rotor (2) which is rotatable about a central axis (M) and which has a rotor disc (21) having at least one fastening section (22), which at least one fastening section projects axially with respect to the central axis (M), wherein the method comprises at least the following steps:
- providing a balancing element (3) having a fitting mouth (30), and
- attaching the balancing element (3) to the at least one fastening section (22) such that the fastening section (22) can be engaged around by the balancing element (3) and at least part of the fastening section (22) is held in the fitting mouth (30),
**characterized in that**
the balancing element (3) has a balancing element body (4) and a fixing element (5) which is mounted adjustably on the latter, wherein the fitting mouth (30) engaging around the fastening section (22) is defined by a section (41a) of the balancing element body (4) and a section (50) of the fixing element (5) .

12. Method according to Claim 11, **characterized in that**,
- for the purpose of fixing the balancing element (3) in a balancing position on the fastening section (22), an adjustably mounted fixing element (5) of the balancing element (3) is adjusted, and/or,
- for the purpose of attaching the balancing element body (4) to the fastening section (22), use is made of a fitting tool (6) on which a balancing element body (4) of the balancing element (3) is held in a positive-locking manner and by means of which the balancing element body (4) is further moved into the balancing position.

## Revendications

1. Agencement de rotor comprenant :
- un rotor (2) pour un groupe motopropulseur (T) qui présente un disque de rotor (21) s'étendant le long d'une direction circonférentielle (U) autour d'un axe médian (M), et
- au moins un élément d'équilibrage (3) qui est monté sur le disque de rotor (21) pour équilibrer le rotor (2),
dans lequel
- au moins une portion de fixation (22) faisant saillie axialement par rapport à l'axe médian (M) est réalisée sur le disque de rotor (21) et
- l'au moins un élément d'équilibrage (3) vient en prise autour de la portion de fixation (22) saillant axialement,
**caractérisé en ce que**
l'au moins un élément d'équilibrage (3) comprend un corps d'élément d'équilibrage (4) et un élément de fixation (5) déplaçable par rapport au corps d'élément d'équilibrage (4) et l'élément de fixation (5) est prévu pour la fixation de l'élément d'équilibrage (3) sur la portion de fixation (22) et est supporté de manière déplaçable par rapport au corps d'élément d'équilibrage (4), de telle sorte que l'élément de fixation (5) puisse être amené en contact avec la portion de fixation (22).

2. Agencement de rotor selon la revendication 1, **caractérisé en ce que** l'au moins un élément d'équilibrage (3) présente un corps d'élément d'équilibrage (4) avec une portion d'engagement circonférentielle (41) au moyen de laquelle l'élément d'équilibrage (3) vient en prise autour de la portion de fixation (22) saillant axialement.

3. Agencement de rotor selon la revendication 2, **caractérisé en ce que** la portion d'engagement circonférentielle (41) présente au moins une première portion de branche (41a) radialement extérieure par rapport à l'axe médian (M) et au moins une deuxième portion de branche (410, 411) radialement intérieure, et au moins une partie de la portion de fixation (22) saillant axialement est reçue entre la première et la deuxième portion de branche (41a ; 410, 411).

4. Agencement de rotor selon la revendication 3, **caractérisé en ce qu'**au moins l'une des première et deuxième portions de branche (41a ; 410, 411) présente une courbure (410a, 411a) convexe dans la direction de la portion de fixation (22).

5. Agencement de rotor selon l'une quelconque des revendications précédentes, **caractérisé en ce que** l'élément d'équilibrage (3) vient en prise autour de la portion de fixation (22) saillant axialement au moyen d'au moins une portion (41a) du corps d'élément d'équilibrage (4) et d'au moins une portion (50) de l'élément de fixation (5).

6. Agencement de rotor selon la revendication 3, **caractérisé en ce que** l'élément de fixation (5) est prévu pour la fixation de l'élément d'équilibrage (3) à la portion de fixation (22) et est supporté de manière déplaçable par rapport au corps d'élément d'équilibrage (4) de telle sorte qu'une distance radiale entre la première et la deuxième portion de branche (41a ; 410) puisse être modifiée par déplacement de l'élément de fixation (5).

7. Agencement de rotor selon la revendication 6, **caractérisé en ce que** l'élément de fixation (5) s'étend avec une portion (53) radialement par rapport à l'axe médian (M) entre la première et la deuxième portion de branche (41a, 410).

8. Agencement de rotor selon la revendication 7, **caractérisé en ce que** la portion (53) de l'élément de fixation (5) s'étendant entre la première et la deuxième portion de branche (41a, 410) ne s'étend pas à travers la portion de fixation (22) mais devant celle-ci.

9. Agencement de rotor selon l'une quelconque des revendications précédentes, **caractérisé en ce que** l'élément de fixation (5) constitue une surface de contact (500) par le biais de laquelle l'élément de fixation (5), pour la fixation d'élément d'équilibrage (3) à la portion de fixation (22), agit sur l'une parmi la première et la deuxième portion de branche (41a, 410) ou sur la portion de fixation (22) saillant axialement.

10. Agencement de rotor selon l'une quelconque des revendications précédentes, **caractérisé en ce que**
- la portion d'engagement circonférentielle (41) présente, en vue de côté le long de l'axe médian (M), un contour trapézoïdal et/ou
- l'au moins un élément d'équilibrage (3) présente un corps d'élément d'équilibrage (4) avec une portion d'engagement circonférentielle (41) au moyen de laquelle l'élément d'équilibrage (3) vient en prise autour de la portion de fixation (22) saillant axialement,
- la portion d'engagement circonférentielle (41) présentant au moins une première portion de branche (41a) radialement extérieure par rapport à l'axe médian (M) et au moins une deuxième portion de branche radialement intérieure (410, 411) et au moins une partie de la portion de fixation (22) saillant axialement étant reçue entre la première et la deuxième portion de branche (41a ; 410, 411), et
- la portion d'engagement circonférentielle (41) présentant deux deuxièmes portions de branche radialement intérieures (410, 411) qui sont opposées à une première portion de branche (41a) radialement extérieure.

11. Procédé de montage d'un élément d'équilibrage (3) sur un rotor (2) pouvant tourner autour d'un axe médian (M), qui présente un disque de rotor (21) avec au moins une portion de fixation (22) saillant axialement par rapport à l'axe médian (M), le procédé présentant au moins les étapes suivantes :
- fourniture d'un élément d'équilibrage (3) avec une mâchoire de montage (30) et
- application de l'élément d'équilibrage (3) sur l'au moins une portion de fixation (22), de telle sorte que la portion de fixation (22) soit saisie sur son pourtour par l'élément d'équilibrage (3), et qu'au moins une partie de la portion de fixation (22) soit reçue dans la mâchoire de montage (30),
**caractérisé en ce que**
l'élément d'équilibrage (3) présente un corps d'élément d'équilibrage (4) et un élément de fixation (5) supporté de manière déplaçable sur celui-ci, la mâchoire de montage (30) venant en prise autour de la portion de fixation (22) étant définie par une portion (41a) du corps d'élément d'équilibrage (4) et une portion (50) de l'élément de fixation (5) .

12. Procédé selon la revendication 11, **caractérisé en ce que**
- pour la fixation de l'élément d'équilibrage (3) dans une position d'équilibrage sur la portion de fixation (22), on déplace un élément de fixation (5) de l'élément d'équilibrage (3) supporté de manière déplaçable et/ou
- pour l'application du corps d'élément d'équilibrage (4) contre la portion de fixation (22), on utilise un outil de montage (6) sur lequel un corps d'élément d'équilibrage (4) de l'élément d'équilibrage (3) est tenu par engagement par correspondance de formes et au moyen duquel le corps d'élément d'équilibrage (4) est en outre déplacé dans la position d'équilibrage.
